# EUROPÄISCHE PATENTANMELDUNG

(11) **EP 4 101 751 A1**
(43) Veröffentlichungstag der Anmeldung: **14.12.2022**
(21) Anmeldenummer: 22178467.1
(22) Anmeldetag: 10.06.2022
(51) Int. Cl.: B62K 21/08

(54) **VORRICHTUNG ZUM BEREITSTELLEN EINES RÜCKSTELLMOMENTS FÜR EINEN ZWEIRADLENKUNGSMECHANISMUS**

(30) Priorität: 10.06.2021 DE 102021115055; 10.06.2021 DE 102021005463; 23.07.2021 DE 102021119189
(71) Anmelder: Klieber, Jochen, 83342 Tacherting (DE)
(72) Erfinder: Klieber, Jochen, 83342 Tacherting (DE)
(74) Vertreter: WBH Wachenhausen Patentanwälte PartG mbB

(57) **Zusammenfassung**

Die Erfindung beschreibt eine Vorrichtung (100) zum Bereitstellen eines Rückstellmoments für einen Zweiradlenkungsmechanismus, mit einer Lagerungseinrichtung (10) zum Lagern der Vorrichtung (100) an einem Zweiradrahmen, einer Kopplungseinrichtung (60) zum Koppeln der Vorrichtung (100) mit einem Gabelschaft, wobei die Kopplungseinrichtung (60) eine Drehachse (A) aufweist, einer Energiespeichereinrichtung (30) zum Speichern einer Rückstellkraft und einer Kraftübertragungseinrichtung (40) zum Übertragen einer Lenkkraft auf die Energiespeichereinrichtung (30), wobei die Kraftübertragungseinrichtung (40) einen zu der Drehachse (A) exzentrischen Kraftübertragungspunkt (P1) aufweist, wobei die Kraftübertragungseinrichtung (40) eine Kraftwirklinie (L) durch den exzentrischen Kraftübertragungspunkt (P1) und einen Angriffspunkt (P2) der Kraftübertragungseinrichtung (40) an der Energiespeichereinrichtung (30) zum Übertragen der Lenkkraft auf die Energiespeichereinrichtung (30) ausbildet, und wobei in einer Neutralstellung (N) der Vorrichtung (100) die Kraftwirklinie (L) und eine Gerade, welche durch die Drehachse (A) und den Angriffspunkt (P2) verläuft, einen Winkel einschließen. Die Erfindung beschreibt zudem einen Zweiradrahmen, eine Zweiradlenkung und ein Zweirad.

## Beschreibung

### Technisches Gebiet

Die vorliegende Erfindung bezieht sich auf eine Vorrichtung zum Bereitstellen eines Rückstellmoments für einen Zweiradlenkungsmechanismus. Die vorliegende Erfindung bezieht sich zudem auf einen Zweiradrahmen, eine Zweiradlenkung und ein Zweirad.

### Stand der Technik

Das Laufverhalten eines Zweirads kann bei geringen Fahrgeschwindigkeiten instabil sein. Bei einer geringen Laufstabilität kann das Vorderrad des Zweirads dazu neigen zur Seite zu kippen. Ein kippendes Vorderrad und ein dadurch seitlich ausschlagender Lenker kann zu gefährlichen Fahrsituationen führen.

Auch bei angehobenem Vorderrad des Zweirads kann das Vorderrad zur Seite kippen und der Lenker seitlich ausschlagen. Beispielsweise ein Abstellen oder Anheben des Zweirads oder ein Transportieren des Zweirads kann so beeinträchtigt sein oder zu Schäden in der Umgebung des Zweirads führen.

### Darstellung der Erfindung

Die vorliegende Erfindung betriff in einem Aspekt eine Vorrichtung zum Bereitstellen eines Rückstellmoments für einen Zweiradlenkungsmechanismus. Die Vorrichtung kann eingerichtet sein, um das Rückstellmoment in Abhängigkeit eines Lenkwinkels bereitzustellen. Bei dem Zweiradlenkungsmechanismus kann es sich um einen Fahrradlenkungsmechanismus oder um einen Motorradlenkungsmechanismus handeln.

Bei dem Rückstellmoment kann es sich um ein Rückstellmoment zum Rückstellen eines Gabelschafts oder eines an diesem angeordneten Zweiradlenkers handeln, welcher ein Fahrradlenker oder ein Motorradlenker sein kann. Das Rückstellmoment kann daher ein Gabelschaftrückstellmoment oder Lenkerrückstellmoment sein oder das Gabelschaftrückstellmoment oder das Lenkerrückstellmoment bewirken. Der Lenkwinkel kann auf einem Einschlagwinkel eines Zweiradlenkers des Zweiradlenkungsmechanismus basieren. Bei der Vorrichtung kann es sich um eine Zweiradkomponente handeln, welche an einem Zweirad nachrüstbar sein kann. Die Vorrichtung kann an einem Zweiradrahmen des Zweirads lagerbar und mit einem Gabelschaft des Zweirads koppelbar sein. Bei der Zweiradkomponente kann es sich um eine Fahrradkomponente und/oder um eine Motorradkomponente handeln.

Das Rückstellmoment kann ein Rückstellen des Zweiradlenkungsmechanismus in eine Neutralstellung der Vorrichtung bewirken. Bei der Neutralstellung kann es sich um einen Zustand der Vorrichtung handeln, welcher ein Geradeausfahren des Zweirads herbeiführen kann. Bei der Neutralstellung kann es sich auch um einen Zustand der Vorrichtung handeln, in welchem sich die Vorrichtung ohne äußere Lenkkrafteinwirkung in einem Momentengleichgewicht beziehungsweise in einem Kraftgleichgewicht befinden kann.

Die Vorrichtung kann eine Lagerungseinrichtung zum Lagern der Vorrichtung an einem Zweiradrahmen aufweisen. Die Lagerungseinrichtung kann an dem Zweiradrahmen anbringbar sein. Die Lagerungseinrichtung kann zum festen Lagern der Vorrichtung an dem Zweiradrahmen eingerichtet sein. Alternativ dazu kann die Lagerungseinrichtung auch zum beweglichen Lagern der Vorrichtung an dem Zweiradrahmen, beispielsweise zum drehgelenkigen Lagern der Vorrichtung an dem Zweiradrahmen, eingerichtet sein. Beispielsweise kann die Lagerungseinrichtung einen Lagerungsstift aufweisen, über welchen die Vorrichtung an dem Zweiradrahmen drehgelenkig lagerbar ist.

Die Vorrichtung kann eine Kopplungseinrichtung zum drehfesten Koppeln der Vorrichtung mit einem Gabelschaft aufweisen. Die Kopplungseinrichtung kann zum kraftschlüssigen und/oder formschlüssigen Koppeln der Vorrichtung mit dem Gabelschaft eingerichtet sein. Beispielsweise kann es sich bei der Kopplungseinrichtung um eine Rundklemme oder um eine Schelle handeln, welche an dem Lenkerschaft drehfest befestigbar ist. Der Lenkwinkel kann daher einem Drehwinkel des Gabelschafts entsprechen. Der Zweiradlenker kann mit dem Gabelschaft über einen Lenkervorbau drehfest verbunden sein. Der Lenkwinkel kann daher auch einem Einschlagwinkel des Zweiradlenkers entsprechen.

Die Kopplungseinrichtung kann eine Drehachse aufweisen, welche einer Drehachse des Gabelschafts entsprechen kann. Bei der Drehachse kann es sich um eine gemeinsame Drehachse des Gabelschafts und der Kopplungseinrichtung handeln. Der Gabelschaft kann an einem Steuersatz in einem Steuerrohr des Zweiradrahmens um die Drehachse drehbar gelagert sein.

Gemäß einer Ausführungsform der Vorrichtung kann es sich bei der Kopplungseinrichtung um eine Vorderradgabel handeln. Die Vorrichtung kann somit über die Vorderradgabel mit dem Gabelschaft gekoppelt sein. Bei der Kopplungseinrichtung kann es sich beispielsweise um einen Gabelarm der Vorderradgabel handeln. Die Vorrichtung kann somit auch über den Gabelarm mit dem Gabelschaft gekoppelt sein. Die Vorrichtung kann somit an einem Vorderrad in besonders kompakter Weise nachgerüstet werden.

Die Vorrichtung kann eine Energiespeichereinrichtung zum Speichern einer Rückstellkraft aufweisen. Bei der Rückstellkraft kann es sich um eine Rückstellkraft zum Rückstellen des Gabelschafts oder des an diesem angeordneten Zweiradlenkers handeln. Die Rückstellkraft kann daher eine Gabelschaftrückstellkraft oder eine Lenkerrückstellkraft sein oder die Gabelschaftrückstellkraft oder die Lenkerrückstellkraft bewirken. Die Energiespeichereinrichtung kann zum Bereitstellen beziehungsweise Abgeben einer sich bei einem Drehen der Kopplungseinrichtung aufbauenden Rückstellkraft eingerichtet sein. Das Drehen der Kopplungseinrichtung kann auf einem Drehen des Lenkerschafts beziehungsweise einem Einschlagen des Zweiradlenkers basieren.

Die Vorrichtung kann eine Kraftübertragungseinrichtung zum Übertragen einer Lenkkraft auf die Energiespeichereinrichtung aufweisen. Die Kraftübertragungseinrichtung kann auch eingerichtet sein, um die Rückstellkraft auf die Kopplungseinrichtung zu übertragen. Die Energiespeichereinrichtung kann zum Einleiten der gespeicherten Rückstellkraft in die Kraftübertragungseinrichtung eingerichtet sein.

Die Kraftübertragungseinrichtung kann einen zu der Drehachse exzentrischen Kraftübertragungspunkt aufweisen. Der Kraftübertragungspunkt kann einen Kraftangriffspunkt eines Krafthebels zum Übertragen der Lenkkraft auf die Energiespeichereinrichtung beziehungsweise zum Bereitstellen des Rückstellmoments ausbilden. Der Krafthebel kann als einseitiger Krafthebel zwischen der Drehachse und dem Kraftübertragungspunkt ausgebildet sein beziehungsweise wirken.

Die Kraftübertragungseinrichtung kann eine Kraftwirklinie durch den exzentrischen Kraftübertragungspunkt und einen Angriffspunkt der Kraftübertragungseinrichtung an der Energiespeichereinrichtung zum Übertragen der Lenkkraft auf die Energiespeichereinrichtung ausbilden. Die Kraftwirklinie kann zum Übertragen einer Zugkraft eingerichtet sein, welche auf der Lenkkraft basiert. Die Kraftlinie kann auch zum Übertragen der Rückstellkraft von der Energiespeichereinrichtung auf die Kopplungseinrichtung eingerichtet sein.

Gemäß einer weiteren Ausführungsform der Vorrichtung kann der Kraftübertragungspunkt und/oder der Angriffspunkt auf einer Rahmenlängsachse beziehungsweise rahmenmittig anordbar beziehungsweise angeordnet sein. Alternativ dazu kann der Kraftübertragungspunkt und/oder der Angriffspunkt versetzt zu der Rahmenlängsachse beziehungsweise rahmenaußermittig anordbar beziehungsweise angeordnet sein.

In einer Neutralstellung der Vorrichtung kann die Kraftwirklinie und eine Gerade, welche durch die Drehachse und den Angriffspunkt verläuft, einen Winkel einschließen. Die Kraftwirklinie kann die Gerade mit dem eingeschlossenen Winkel schneiden. Bei dem Winkel handelt es sich um einen Winkel, welcher nicht 180° beträgt. Bei dem Winkel handelt es sich insbesondere um einen spitzen Winkel. Bei der Kraftwirklinie kann es sich um eine bei einem sich aus der Neutralstellung einstellenden Lenkwinkel wirkende Kraftlinie handeln.

Mit der erfindungsgemäßen Vorrichtung kann in vorteilhafter Weise ein unmittelbares Ansprechverhalten der Energiespeichereinrichtung beim Aufbauen eines Rückstellmoments bei einem sich aus der Neutralstellung in einem vorbestimmten Lenkwinkelbereich einstellenden Lenkwinkel geschaffen werden. Mit dem zu der Geraden durch die Drehachse und den Angriffspunkt beabstandeten Kraftübertragungspunkt und der daraus resultierenden und zu der Geraden schräg ausgebildeten Kraftwirklinie kann eine Wirkverbindung zum Übertragen der Lenkkraft auf die Energiespeichereinrichtung direkt bereitgehalten werden. Ein initialer Totbereich in der Kraftübertragung bei dem sich aus der Neutralstellung in den vorbestimmten Lenkwinkelbereich einstellenden Lenkwinkel kann daher mit der Vorrichtung verringert beziehungsweise eliminiert werden.

Mit der Erfindung kann als vorteilhafter Effekt ein verbessertes Fahrverhalten eines Zweirads erzielt werden. Insbesondere kann das Laufverhalten des Zweirads mit der Erfindung stabiler sein. Im Weiteren kann mit der Erfindung auch eine verbesserte Handhabung eines Fahrrads erzielt werden. Insbesondere kann ein Ausschlagen eines angehobenen Vorderrads unterbunden werden.

Ein weiterer besonders vorteilhafter Effekt der Erfindung liegt darin, dass durch das verbesserte Fahrverhalten und die erhöhte Laufstabilität des Zweirads mit der erfindungsgemäßen Vorrichtung ein vergrößerter Spielraum bei der Auslegung der Lenkgeometrieparameter eines Zweirads erreicht wird. Die Lenkgeometrieparameter eines Zweirads können somit durch die Erfindung in einem größeren Parameterbereich verändert werden, ohne damit die Laufstabilität des Zweirads zu gefährden. Beispielsweise besteht somit mit der Erfindung ein größerer Spielraum bei Anpassungen beziehungsweise Änderungen des Steuerkopfwinkels, des Vorderraddurchmessers, der Gabelbiegung oder des Nachlaufs bei einer Vorderradlenkung.

Gemäß einer weiteren Ausführungsform der Vorrichtung kann die Kraftübertragungseinrichtung zwei Kraftübertragungselemente zum Übertragen der Lenkkraft auf die Energiespeichereinrichtung aufweisen. Gemäß dieser Ausführungsform können die Kraftübertragungselemente jeweils einen zu der Drehachse exzentrischen Kraftübertragungspunkt aufweisen. Gemäß dieser Ausführungsform kann eine Kraftwirklinie durch einen exzentrischen Kraftübertragungspunkt und den Angriffspunkt zum Übertragen der Lenkkraft auf die Energiespeichereinrichtung bei einem Lenken nach rechts ausgebildet sein. Die Kraftübertragungseinrichtung kann einen weiteren Angriffspunkt zum Übertragen der Lenkkraft auf die Energiespeichereinrichtung an der Energiespeichereinrichtung aufweisen. Der weitere Angriffspunkt kann an der Energiespeichereinrichtung beabstandet zu dem Angriffspunkt ausgebildet sein. Eine weitere Kraftwirklinie kann durch den weiteren exzentrischen Kraftübertragungspunkt und den Angriffspunkt oder den weiteren Angriffspunkt zum Übertragen der Lenkkraft auf die Energiespeichereinrichtung bei einem Lenken nach links ausgebildet sein. In der Neutralstellung der Vorrichtung kann die weitere Kraftwirklinie durch den weiteren exzentrischen Kraftübertragungspunkt und eine weitere Gerade, welche durch die Drehachse und den weiteren Angriffspunkt verläuft, einen weiteren Winkel einschließen. Der weitere Winkel kann wie der beschriebene Winkel ausgebildet sein.

Die Kraftwirklinien können in dem Angriffspunkt einen Winkel einschließen, welcher dem doppelten Winkel zwischen der Kraftwirklinie und der Geraden durch die Drehachse und den Angriffspunkt entspricht. Die Kraftübertragungselemente können in der Neutralstellung achsensymmetrisch zu einer Geraden durch den Angriffspunkt und die Drehachse angeordnet sein. Die Kraftübertragungspunkte können ferner in der Neutralstellung gleichbeabstandet zu der Drehachse angeordnet sein. Die Vorrichtung kann somit für ein Lenken nach rechts und links ein entsprechendes Rückstellmoment symmetrisch bereitstellen.

Gemäß einer weiteren Ausführungsform der Vorrichtung kann die Vorrichtung eingerichtet sein, um in der Neutralstellung Energie auf die Energiespeichereinrichtung zu übertragen, mit welcher in der Neutralstellung eine Stabilisierungskraft zum Stabilisieren des Gabelschafts über die Kraftübertragungseinrichtung auf die Kopplungseinrichtung übertragbar ist. Die auf die Energiespeichereinrichtung übertragene Energie kann von der Lagerungseinrichtung und/oder von der Kraftübertragungseinrichtung auf die Energiespeichereinrichtung übertragen werden. Bei der Stabilisierungskraft kann es sich um eine in der Vorrichtung wirkenden Zugkraft handeln, wobei die Kraftübertragungseinrichtung in der Neutralstellung auf Zug beansprucht sein kann. Die Stabilisierungskraft kann einem Auslenken des Lenkungsmechanismus entgegenwirken. Somit kann die Vorrichtung bereits in der Neutralstellung die Laufstabilität und die Handhabbarkeit eines Zweirads erhöhen.

Gemäß einer weiteren Ausführungsform der Vorrichtung kann die Vorrichtung einen Kompensationsmechanismus aufweisen, welcher zum Kompensieren einer Zugbeanspruchung eingerichtet ist, die bei einem sich aus der Neutralstellung in einem vorbestimmten Lenkwinkelbereich einstellenden Lenkwinkel auf die Energiespeichereinrichtung einwirkt. Der Kompensationsmechanismus kann die Zugbeanspruchung in eine weitere Form einer Beanspruchung der Energiespeichereinrichtung, beispielsweise eine Biegebeanspruchung oder eine Torsionsbeanspruchung umwandeln. Das Rückstellmoment kann sich daher während des sich aus der Neutralstellung in dem vorbestimmten Lenkwinkelbereich einstellenden Lenkwinkels in Abhängigkeit der weiteren Form der Beanspruchung ausbilden. Der Kompensationsmechanismus kann derart eingerichtet sein, dass sich ein Aufbau des Rückstellmoments, insbesondere ein progressiver Aufbau des Rückstellmoments, rucklos bei einem Lenken aus der Neutralstellung einstellen kann.

Gemäß einer weiteren Ausführungsform der Vorrichtung kann die Kraftübertragungseinrichtung eingerichtet sein, um bei einem sich aus der Neutralstellung in einem vorbestimmten Lenkwinkelbereich einstellenden Lenkwinkel einen progressiven Aufbau des Rückstellmoments bereitzustellen. Der progressive Aufbau kann in einem weiteren Lenkwinkelbereich, welcher an den vorbestimmten Lenkwinkelbereich angrenzt, in einen proportionalen oder degressiven Aufbau des Rückstellmoments übergehen. Der progressive Aufbau kann das unmittelbare Ansprechverhalten der Energiespeichereinrichtung bei dem sich aus der Neutralstellung in einem vorbestimmten Lenkwinkelbereich aufbauenden Rückstellmoment verbessern.

Gemäß einer weiteren Ausführungsform der Vorrichtung kann die Kraftübertragungseinrichtung eingerichtet sein, um bei einem sich in einem vorbestimmten Lenkwinkelbereich einstellenden Lenkwinkel einen degressiven Aufbau des Rückstellmoments bereitzustellen. Gemäß einer weiteren Ausführungsform der Vorrichtung kann der sich aus der Neutralstellung in dem vorbestimmten Lenkwinkelbereich einstellende Lenkwinkel zum Bereitstellen des progressiven Aufbaus des Rückstellmoments kleiner sein als der sich in dem vorbestimmten Lenkwinkelbereich einstellende Lenkwinkel zum Bereitstellen des degressiven Aufbaus des Rückstellmoments. Die vorbestimmten Lenkwinkelbereiche können aneinander angrenzen oder einen Winkelabstand zueinander aufweisen.

Noch gemäß einer weiteren Ausführungsform der Vorrichtung kann die Kraftübertragungseinrichtung eingerichtet sein, um bei einem sich in einem vorbestimmten Lenkwinkelbereich einstellenden Lenkwinkel einen proportionalen Aufbau des Rückstellmoments bereitzustellen. Die Kraftübertragungseinrichtung kann derart eingerichtet sein, dass sich der degressive Aufbau des Rückstellmoments aus dem proportionalen Aufbau des Rückstellmoments einstellen kann, welcher den progressiven Aufbau des Rückstellmoments und den degressiven Aufbau des Rückstellmoments verbinden kann. Der progressive Aufbau des Rückstellmoments oder der degressive Aufbau des Rückstellmoments kann durch eine variable Kraftübersetzung in der Kraftübertragungseinrichtung herbeigeführt werden, wobei die variable Kraftübersetzung in dem entsprechenden vorbestimmten Lenkwinkelbereich ausgebildet sein kann. Insbesondere durch den degressiven Aufbau kann das Ansprechverhalten der Energiespeichereinrichtung auch bei großen Lenkwinkeln aufrechterhalten werden.

Gemäß einer weiteren Ausführungsform der Vorrichtung kann die Energiespeichereinrichtung die Lagerungseinrichtung und die Kopplungseinrichtung elastisch koppeln. Die Energiespeichereinrichtung kann mindestens ein elastisches Energiespeicherelement aufweisen. Bei dem Energiespeicherelement kann es sich beispielsweise um eine Feder handeln. Die Kraftübertragungselemente der Kraftübertragungseinrichtung können daher nicht elastisch, insbesondere zugstarr, ausgebildet sein. Alternativ oder zusätzlich zu dem elastischen Energiespeicherelement können auch die Kraftübertragungselemente zumindest teilweise elastisch ausgebildet sein. Gemäß einer weiteren Ausführungsform kann die Kraftübertragungseinrichtung ein weiteres beziehungsweise zusätzliches Energiespeicherelement aufweisen. Eine elastisch verformbare Energiespeichereinrichtung kann in vorteilhafter Weise eine elastische Rückstellung zur Bereitstellung der Rückstellkraft und eine beim Lenken in der Vorrichtung sich einstellenden Längenänderung bereithalten.

Gemäß einer weiteren Ausführungsform kann die Energiespeichereinrichtung zwei Energiespeicherelemente zum Speichern einer Rückstellkraft aufweisen. Mindestens eines der beiden Energiespeicherelemente kann wie das elastische Energiespeicherelement ausgebildet sein. Eines der beiden Energiespeicherelemente kann zum Speichern einer Rückstellkraft bei einem Lenken nach rechts und das weitere der beiden Energiespeicherelemente kann zum Speichern einer Rückstellkraft bei einem Lenken nach links ausgebildet sein. Eines der beiden Energiespeicherelemente kann zum Bereitstellen beziehungsweise Abgeben einer sich bei einem Drehen der Kopplungseinrichtung bei einem Lenken nach rechts aufbauenden Rückstellkraft eingerichtet sein. Das weitere der beiden Energiespeicherelemente kann daher zum Speichern der Rückstellkraft bei dem Lenken nach rechts eingerichtet sein. Die Kraftwirklinie kann durch den exzentrischen Kraftübertragungspunkt und den Angriffspunkt zum Übertragen der Lenkkraft auf das Energiespeicherelement bei einem Lenken nach rechts ausgebildet sein. Das weitere der beiden Energiespeicherelemente kann zum Bereitstellen beziehungsweise Abgeben einer sich bei einem Drehen der Kopplungseinrichtung bei einem Lenken nach links aufbauenden Rückstellkraft eingerichtet sein. Das weitere Energiespeicherelement kann daher zum Speichern der Rückstellkraft bei dem Lenken nach links eingerichtet sein. Die beiden Energiespeicherelemente können in vorteilhafter Weise an einem Zweiradrahmen exponiert nachgerüstet werden. Die weitere Kraftwirklinie kann durch den weiteren exzentrischen Kraftübertragungspunkt und den weiteren Angriffspunkt zum Übertragen der Lenkkraft auf das weitere Energiespeicherelement bei einem Lenken nach links ausgebildet sein.

Gemäß einer weiteren Ausführungsform kann die Lagerungseinrichtung zwei Lagerungselemente zum Lagern der Vorrichtung an dem Zweiradrahmen aufweisen. Das Energiespeicherelement kann über eines der beiden Lagerungselemente an dem Zweiradrahmen lagerbar beziehungsweise gelagert sein. Das weitere Energiespeicherelement kann über das weitere der beiden Lagerungselemente an dem Zweiradrahmen lagerbar beziehungsweise gelagert sein. Die Lagerungselemente können beabstandet zueinander an dem Zweiradrahmen, beispielsweise einem Rahmenrohr, anbringbar beziehungsweise angebracht sein. Die Lagerungselemente können exponiert beziehungsweise von außen an dem Rahmenrohr anbringbar beziehungsweise angebracht sein, beispielsweise in Ausnehmungen des Rahmenrohrs lagerbar beziehungsweise gelagert sein.

Gemäß einer weiteren Ausführungsform der Vorrichtung kann die Energiespeichereinrichtung mindestens eine Feder zum Speichern einer Spannenergie aufweisen. Mindestens eines der beiden Energiespeicherelemente kann die Feder aufweisen. Die Energiespeichereinrichtung kann beispielsweise ein Federpaar aufweisen. Gemäß einer weiteren Ausführungsform der Vorrichtung kann die Feder als eine Zugfeder ausgebildet sein. Gemäß noch einer weiteren Ausführungsform der Vorrichtung kann die Feder als eine Druckfeder ausgebildet sein. Die mindestens eine Feder kann eine Spiralfeder sein oder aufweisen. Alternativ oder zusätzlich kann die mindestens eine Feder eine Elastomerfeder sein oder aufweisen. Die in der Feder gespeicherte Spannenergie kann die Rückstellkraft bereitstellen beziehungsweise bewirken.

Gemäß einer weiteren Ausführungsform der Vorrichtung kann die Vorrichtung eingerichtet sein, um in der Neutralstellung die Feder mit einer Vorspannung zu beaufschlagen, mit welcher in der Neutralstellung eine Stabilisierungskraft zum Stabilisieren des Gabelschafts über die Kraftübertragungseinrichtung auf die Kopplungseinrichtung übertragbar ist. Die Lagerungseinrichtung und/oder die Kraftübertragungseinrichtung kann eingerichtet sein, um die Feder mit der Vorspannung zu beaufschlagen. Die Vorspannung der Feder kann den progressiven Aufbau des Rückstellmoments weiter verbessern.

Gemäß einer weiteren Ausführungsform der Vorrichtung kann die Feder derart eingerichtet sein, dass sie bei einem sich aus der Neutralstellung in einem vorbestimmten Lenkwinkelbereich einstellenden Lenkwinkel biegebeansprucht ist. Die Feder kann daher Bestandteil des Kompensationsmechanismus zum Kompensieren der Zugbeanspruchung sein. Eine Biegebeanspruchung der Feder in dem sich aus der Neutralstellung in einem vorbestimmten Lenkwinkelbereich einstellenden Lenkwinkel kann in eine Zugbeanspruchung der Feder in einem an den vorbestimmten Lenkwinkelbereich angrenzenden Lenkwinkelbereich übergehen oder sich mit einer Zugbeanspruchung überlagern. Die Biegebeanspruchung kann durch die Zugelemente herbeigeführt werden, welche in dem sich aus der Neutralstellung in einem vorbestimmten Lenkwinkelbereich einstellenden Lenkwinkel derart an der Feder angreifen können, dass die Zugelemente gemeinsam eine Zugkraft auf die Feder einleiten und so die Biegebeanspruchung herbeiführen können.

Gemäß einer weiteren Ausführungsform der Vorrichtung kann die Kraftübertragungseinrichtung einen Zugmechanismus aufweisen, welcher die Kopplungseinrichtung und die Energiespeichereinrichtung zum Übertragen einer auf der Lenkkraft basierenden Zugkraft auf die Energiespeichereinrichtung verbindet. Der Zugmechanismus kann an der Kopplungseinrichtung und an der Energiespeichereinrichtung zugfest angebracht sein.

Gemäß einer weiteren Ausführungsform der Vorrichtung kann der Zugmechanismus zwei Zugelemente zum Übertragen der Lenkkraft auf die Energiespeichereinrichtung aufweisen. Die Kraftübertragungselemente können die Zugelemente aufweisen beziehungsweise als solche ausgebildet sein. Gemäß dieser Ausführungsform kann eine Kraftwirklinie durch ein Zugelement zum Übertragen der Lenkkraft auf die Energiespeichereinrichtung bei einem Lenken nach rechts ausgebildet sein. Eine weitere Kraftwirklinie kann durch das weitere Zugelement zum Übertragen der Lenkkraft auf die Energiespeichereinrichtung bei einem Lenken nach links ausgebildet sein.

Entlang der jeweiligen Kraftwirklinie kann eine Zugkraft in die Energiespeichereinrichtung eingeleitet werden. Eine durch die exzentrischen Kraftübertragungspunkte aus der Lenkkraft resultierende Zugkraft kann somit bei einem Lenken nach rechts und links in die Energiespeichereinrichtung eingeleitet werden und eine entsprechende Rückstellkraft bewirken.

Gemäß einer weiteren Ausführungsform der Vorrichtung kann der Zugmechanismus derart eingerichtet sein, dass bei einem sich aus der Neutralstellung in einem vorbestimmten Lenkwinkelbereich einstellenden Lenkwinkel beide Zugelemente zugbeansprucht sind. Eine derartige Zugbeanspruchung kann aus der in der Neutralstellung auf die Energiespeichereinrichtung übertragene Energie resultieren. So kann die Zugbeanspruchung beispielsweise aus der Vorspannung, mit welcher die Feder beaufschlagt sein kann, resultieren.

Gemäß einer weiteren Ausführungsform der Vorrichtung können die Zugelemente an der Energiespeichereinrichtung beabstandet zueinander angeordnet sein. Eine derart beabstandete Anordnung kann ein Bestandteil des Kompensationsmechanismus sein. Ferner kann die Biegebeanspruchung der Feder auf der beabstandeten Anordnung basieren. Gemäß einer weiteren Ausführungsform der Vorrichtung kann der Zugmechanismus die Kopplungseinrichtung und die Energiespeichereinrichtung über eine 4-Punkt-Verbindung, insbesondere eine Trapezverbindung, verbinden. Gemäß einer Ausführungsform kann die Kopplungseinrichtung und die Energiespeicherelemente über eine 4-Punkt-Verbindung, insbesondere eine Trapezverbindung, verbunden sein. Die kürzere Grundseite der Trapezverbindung kann an der Energiespeichereinrichtung beziehungsweise an den Energiespeicherelementen angeordnet sein und die längere Grundseite der Trapezverbindung kann an der Kopplungseinrichtung angeordnet sein. Gemäß einer weiteren Ausführungsform der Vorrichtung können die Schenkel der Trapezverbindung durch Zugelemente zum Übertragen der Lenkkraft auf die Energiespeichereinrichtung beziehungsweise auf die Energiespeicherelemente ausgebildet sein. Die Zugelemente können eingerichtet sein, um eine auf der Lenkkraft basierende Zugkraft in die Energiespeichereinrichtung beziehungsweise in die Energiespeicherelemente einzuleiten. Die Zugelemente können mindestens ein Zugband aufweisen, welches die Kopplungseinrichtung über oder an dem Kraftübertragungspunkt mit der Energiespeichereinrichtung beziehungsweise mit den Energiespeicherelementen zugfest verbinden kann.

Alternativ oder zusätzlich zu dem Zugband können die Zugelemente mindestens eine Zugstange aufweisen, welche die Kopplungseinrichtung über den Kraftübertragungspunkt oder an dem Kraftübertragungspunkt mit der Energiespeichereinrichtung zugfest verbinden kann. So können insbesondere auch beide Zugelemente durch Zugbänder oder Zugstangen ausgebildet sein. Die Zugelemente können zumindest bereichsweise als zugstarre Zugelemente ausgebildet sein. Alternativ oder zusätzlich können die Zugelemente zumindest bereichsweise als elastische Zugelemente, beispielsweise als Zugfedern, ausgebildet sein. Ein Zugelement kann an dem Kraftübertragungspunkt beziehungsweise an der Kopplungseinrichtung beweglich gelagert oder geführt sein. Somit können aus der Lenkkraft in der Vorrichtung resultierende Zugkräfte effizient in die Energiespeichereinrichtung eingeleitet werden.

Gemäß einer weiteren Ausführungsform der Vorrichtung kann mindestens eines der Zugelemente durch ein Band ausgebildet sein, welches mit der Kopplungseinrichtung verbunden ist. Bei dem Band kann es sich um das beschriebene Zugband handeln oder umgekehrt. Es können beide Zugelemente durch ein Band ausgebildet sein, wobei das Band aus zusammenhängenden Bandabschnitten gebildet sein kann. Das Band kann die Kopplungseinrichtung und die Energiespeichereinrichtung derart verbinden, dass das Band bei einem Lenken nach rechts und bei einem Lenken nach links auf Zug beanspruchbar ist. Das Band kann zumindest bereichsweise als zugstarres und/oder elastisches Band ausgebildet sein.

Gemäß einer weiteren Ausführungsform der Vorrichtung kann das Band als biegeschlaffes Band ausgebildet sein. Das Band kann radial zu der Drehachse verformbar sein und an einem zu dem Kraftübertragungspunkt beabstandeten Befestigungspunkt an der Kopplungseinrichtung befestigt werden. Der Kraftübertragungspunkt kann somit auch ein Kraftübersetzungspunkt sein, an welchem das Kraftübertragungselement, das Zugelement oder das Band angeordnet sein kann. Das Band kann an dem Kraftübertragungspunkt abgespreizt beziehungsweise radial zu der Drehachse gedehnt werden. Das Band kann daher ein für eine Kraftübertragung variabel ausrichtbares und gleichzeitig zugfestes Zugelement ausbilden.

Gemäß einer weiteren Ausführungsform der Vorrichtung kann das Band ein aus einem Kunststoff hergestelltes Band, insbesondere ein aus Aramidfasern hergestelltes Band, aufweisen. Das Gewicht der Vorrichtung, welche als Zweiradkomponente ausgebildet sein kann, kann so bei Aufrechterhaltung der Zugfestigkeit effizient reduziert werden.

Gemäß einer weiteren Ausführungsform der Vorrichtung kann die Kraftübertragungseinrichtung ein an der Kopplungseinrichtung angeordnetes Kraftübersetzungselement aufweisen, an welchem der Kraftübertragungspunkt ausgebildet ist. Das Kraftübersetzungselement kann den Krafthebel ausbilden. Das Kraftübersetzungselement kann eine radial zu der Drehachse ausgebildete Kontur aufweisen oder einer solchen Kontur folgen, wobei der Kraftübertragungspunkt bei einem sich einstellenden Lenkwinkel auf der Kontur wandern kann, beziehungsweise sich variabel einstellen kann.

Gemäß einer weiteren Ausführungsform kann das Kraftübersetzungselement an der Vorderradgabel angeordnet sein. Die Vorderradgabel kann das Kraftübersetzungselement aufweisen beziehungsweise ausbilden. Die Vorderradgabel und das Kraftübersetzungselement können einstückig ausgebildet sein. Das Kraftübersetzungselement kann ferner in die Vorderradgabel integriert sein.

Gemäß einer weiteren Ausführungsform der Vorrichtung kann das Kraftübersetzungselement eingerichtet sein, um bei einem sich in einem vorbestimmten Lenkwinkelbereich einstellenden Lenkwinkel eine Kraftübersetzung zum Übertragen der Lenkkraft auf die Energiespeichereinrichtung variabel einzustellen. Gemäß einer weiteren Ausführungsform der Vorrichtung kann das Kraftübersetzungselement eingerichtet sein, um bei einem sich in einem vorbestimmten Lenkwinkelbereich einstellenden Lenkwinkel eine Kraftübersetzung für ein degressives Aufbauen des Rückstellmoments bereitzustellen. Bei dem vorbestimmten Lenkwinkelbereich kann es sich somit insbesondere um den Lenkwinkelbereich handeln, bei dem aus der Neutralstellung der progressive Aufbau des Rückstellmoments bereitstellbar ist.

Alternativ oder zusätzlich zu der eingerichteten Kraftübersetzung für ein degressives Aufbauen des Rückstellmoments kann das Kraftübersetzungselement eingerichtet sein, um bei einem sich in einem vorbestimmten Lenkwinkelbereich einstellenden Lenkwinkel eine Kraftübersetzung für ein progressives Aufbauen des Rückstellmoments bereitzustellen. Bei dem vorbestimmten Lenkwinkelbereich kann es sich insbesondere auch um den Lenkwinkelbereich handeln, bei dem der degressive Aufbau des Rückstellmoments bereitgestellt wird. Das Kraftübersetzungselement kann mit der Kontur eingerichtet sein, um die Kraftübersetzung entsprechend bereitzustellen.

Gemäß einer weiteren Ausführungsform der Vorrichtung kann das Kraftübersetzungselement ein Nocken sein oder einen solchen aufweisen. Die Vorrichtung kann zwei Kraftübersetzungselemente aufweisen, an welchen jeweils einer der beschriebenen Kraftübertragungspunkte angeordnet sein kann. Die Vorrichtung kann daher auch einen Doppelnocken aufweisen. Die beschriebene Kontur kann auf dem Nocken ausgebildet sein.

Gemäß einer weiteren Ausführungsform der Vorrichtung kann die Kopplungseinrichtung mit dem Kraftübersetzungselement einstückig ausgebildet sein. Die Kopplungseinrichtung kann daher den Nocken oder den Doppelnocken aufweisen beziehungsweise ausbilden. Der Bauraum der Vorrichtung kann somit derart verkleinert werden, dass die Kopplungseinrichtung platzsparend an einem Zweiradrahmen verbaut werden kann.

Gemäß einer weiteren Ausführungsform der Vorrichtung kann die Lagerungseinrichtung einen Betätigungsmechanismus zum Übertragen von Energie in der Neutralstellung auf die Energiespeichereinrichtung aufweisen. Der Betätigungsmechanismus kann zum Einleiten einer Kraft, beispielsweise einer Zugkraft, in die Energiespeichereinrichtung eingerichtet sein. Die Energiespeichereinrichtung kann daher eingerichtet sein, um in der Neutralstellung Energie beziehungsweise eine Kraft, beispielsweise die Stabilisierungskraft, auf die Kraftübertragungseinrichtung zu übertragen. Gemäß einer weiteren Ausführungsform der Vorrichtung kann der Betätigungsmechanismus eingerichtet sein, um in der Neutralstellung Spannenergie auf die Feder zu übertragen. Der Betätigungsmechanismus kann zum Einleiten einer Kraft, beispielsweise einer Zugkraft, in die Feder eingerichtet sein. Die Feder kann daher eingerichtet sein, um in der Neutralstellung Energie beziehungsweise eine Kraft, beispielsweise die Stabilisierungskraft, auf die Kraftübertragungseinrichtung zu übertragen.

Gemäß einer weiteren Ausführungsform der Vorrichtung kann der Betätigungsmechanismus einen rotatorisch betätigbaren Exzenter aufweisen, welcher mit der Energiespeichereinrichtung zum Umwandeln einer Rotationsbewegung des Exzenters in auf die Energiespeichereinrichtung übertragbare Energie wirkverbunden sein kann. Der Exzenter kann ein Lagerungselement aufweisen, mit welchem der Exzenter an dem Zweiradrahmen lagerbar ist. Die Lagerungseinrichtung kann einen exzentrisch gelagerten Zylinder aufweisen, welcher den Exzenter ausbildet. Die Energiespeichereinrichtung kann eine Aufnahme aufweisen, in welcher der Exzenter beziehungsweise der Zylinder rotatorisch gelagert sein kann. Die Rotationsbewegung des Exzenters kann somit in eine Translationsbewegung der Aufnahme umgewandelt werden, welche die beschriebene Kraft in die Energiespeichereinrichtung übertragen kann. Bei der Aufnahme kann es sich um eine zylindrische Aufnahme handeln. Mit dem Exzenter kann der Betätigungsmechanismus zum Übertragen von Energie auf die Energiespeichereinrichtung in der Neutralstellung in besonders platzsparender Weise in einer Rahmenkomponente eines Zweiradrahmens angeordnet werden.

Gemäß einer weiteren Ausführungsform der Vorrichtung kann der Betätigungsmechanismus einen translatorisch betätigbares Betätigungselement aufweisen, welches mit der Energiespeichereinrichtung zum Umwandeln einer Translationsbewegung des Betätigungselements in auf die Energiespeichereinrichtung übertragbare Energie wirkverbunden ist. Das Betätigungselement kann ein Führungselement aufweisen, mit welchem das Betätigungselement an dem Zweiradrahmen linear führbar ist. Das Betätigungselement kann ein Schiebeelement sein, welches mit der Energiespeichereinrichtung zugstarr verbunden ist, um eine auf das Schiebeelement ausgeübte Schubkraft auf die Energiespeichereinrichtung zu übertragen. Das Schiebeelement kann mit der Feder zugstarr verbunden sein, um eine Spannkraft auf die Feder zu übertragen. Das Schiebeelement kann eingerichtet sein, um manuell betätigbar zu sein. Das Schiebeelement kann beispielsweise durch ein in einer Rahmenkomponente angeordnetes Langloch betätigt werden. Mit dem Schiebeelement, welches in der Rahmenkomponente integriert sein kann, können an der Rahmenkomponente exponierte Bauteile vermieden werden.

Gemäß einer weiteren Ausführungsform der Vorrichtung kann der Betätigungsmechanismus ein drehfest mit dem Exzenter verbundenes Betätigungselement, insbesondere einen Betätigungshebel, aufweisen, mit welchem die Rotationsbewegung des Exzenters werkzeuglos herbeigeführt werden kann. Das Betätigungselement kann eingerichtet sein, um manuell betätigbar zu sein. Das Betätigungselement kann auch das Lagerungselement zum Lagern der Betätigungseinrichtung an dem Zweiradrahmen ausbilden. Das Betätigungselement kann drehfest mit dem Exzenter verbunden sein und eine Rotationsbewegung auf diesen übertragen. Gemäß einer weiteren Ausführungsform der Vorrichtung kann die Lagerungseinrichtung eine Führung, insbesondere eine gekrümmte Führungsnut, zum Führen einer Rotationsbewegung des Exzenters aufweisen. Die Führung kann an der Aufnahme oder an dem Exzenter ausgebildet sein.

Gemäß einer weiteren Ausführungsform der Vorrichtung kann die Lagerungseinrichtung mindestens einen Anschlagskörper zum Einstellen einer vordefinierten Rotationslage des Exzenters aufweisen, in welcher der Betätigungsmechanismus in der Neutralstellung ein vordefiniertes und in der Energiespeichereinrichtung gespeichertes Energieniveau bewirkt. Somit kann in der Neutralstellung bereits ein vordefiniertes Energieniveau bereitgehalten werden, um insbesondere die Stabilisierungskraft bereitzustellen. Der progressive Aufbau und das unmittelbare Ansprechverhalten der Energiespeichereinrichtung bei dem sich aus der Neutralstellung in einem vorbestimmten Lenkwinkelbereich aufbauenden Rückstellmoments kann so weiter verbessert werden. Gemäß einer weiteren Ausführungsform der Vorrichtung kann die Führung den Anschlagskörper aufweisen. Die Lagerungseinrichtung kann so einen besonders kompakten Aufbau haben.

Die vorliegende Erfindung betriff in einem weiteren Aspekt einen Zweiradrahmen, an welchem die Vorrichtung nach dem vorhergehenden Aspekt mit einem Gabelschaft verbindbar gelagert ist. Bei dem Zweiradrahmen kann es sich um einen Fahrradrahmen oder um einen Motorradrahmen handeln. Die Vorrichtung kann an mindestens einem Rahmenrohr des Zweiradrahmens, beispielsweise an einem Rahmenoberrohr und/oder einem Rahmenunterrohr des Zweiradrahmens, gelagert sein.

Gemäß einer Ausführungsform des Zweiradrahmens kann die Vorrichtung in mindestens einer Rahmenkomponente des Zweiradrahmens integriert angeordnet sein. Die Energiespeichereinrichtung beziehungsweise die Energiespeicherelemente können in dem Zweiradrahmen integriert angeordnet sein. Alternativ dazu kann die Energiespeichereinrichtung beziehungsweise die Energiespeicherelemente außerhalb des Zweiradrahmens angeordnet sein. Die Vorrichtung kann in mindestens einem Rahmenrohr des Zweiradrahmens, beispielsweise in einem Rahmenoberrohr und/oder in einem Rahmenunterrohr des Zweiradrahmens, zumindest teilweise integriert angeordnet sein. Die Energiespeichereinrichtung beziehungsweise die Energiespeicherelemente können in dem mindestens einen Rahmenrohr des Zweiradrahmens, beispielsweise in dem Rahmenoberrohr und/oder in dem Rahmenunterrohr des Zweiradrahmens, zumindest teilweise integriert angeordnet sein. Alternativ dazu kann die Energiespeichereinrichtung beziehungsweise die Energiespeicherelemente außerhalb des mindestens einen Rahmenrohrs des Zweiradrahmens, beispielsweise außerhalb des Rahmenoberrohrs und/oder außerhalb des Rahmenunterrohrs des Zweiradrahmens, angeordnet sein. Die Vorrichtung kann an dem Rahmenoberrohr und/oder an dem Rahmenunterrohr gelagert sein. Die Vorrichtung kann in einem Steuerrohr des Zweiradrahmens zumindest teilweise integriert angeordnet sein. Die Vorrichtung kann zu dem Steuerrohr beabstandet beziehungsweise zu diesem kontaktlos angeordnet sein.

Die vorliegende Erfindung betriff in einem weiteren Aspekt eine Zweiradlenkung. Die Zweiradlenkung weist die Vorrichtung nach dem entsprechenden vorhergehenden Aspekt auf. Die Zweiradlenkung kann einen Gabelschaft aufweisen, mit welchem die Vorrichtung gekoppelt ist. Bei der Zweiradlenkung kann es sich um eine Fahrradlenkung oder um eine Motorradlenkung handeln. Gemäß einer weiteren Ausführungsform der Zweiradlenkung kann die Vorrichtung über eine Zweiradgabel mit dem Gabelschaft gekoppelt sein. Die Vorrichtung kann beispielsweise über einen Gabelarm der Zweiradgabel mit dem Gabelschaft gekoppelt sein.

Die vorliegende Erfindung betriff in einem weiteren Aspekt ein Zweirad. Das Zweirad weist einen Zweiradrahmen nach dem entsprechenden vorhergehenden Aspekt und/oder eine Zweiradlenkung nach dem entsprechenden vorhergehenden Aspekt auf. Bei dem Zweirad kann es sich um ein Fahrrad, einen Tretroller, einen Motorroller oder um ein Motorrad handeln.

Bei der vorliegenden Erfindung können Ausführungsformen und Merkmale eines der beschriebenen Aspekte entsprechende Ausführungsformen und Merkmale eines weiteren der beschriebenen Aspekte bilden.

### Kurze Beschreibung der Figuren

- Figur 1a: zeigt eine Vorrichtung zum Bereitstellen eines Rückstellmoments in einer schematischen Darstellung gemäß einer Ausführungsform zur Erläuterung der Erfindung.
- Figur 1b: zeigt die Vorrichtung zum Bereitstellen eines Rückstellmoments in einer schematischen Darstellung gemäß einer weiteren Ausführungsform zur Erläuterung der Erfindung.
- Figur 2: zeigt eine Vorrichtung zum Bereitstellen eines Rückstellmoments in einer perspektivischen Ansicht gemäß einer Ausführungsform der Erfindung.
- Figur 3: zeigt die Vorrichtung von Figur 2 in einer Explosionsansicht.
- Figur 4: zeigt die Vorrichtung von Figur 2 in einer Schnittansicht.
- Figur 5: zeigt die Vorrichtung von Figur 2 in einer Schnittansicht in einem energetischen Zustand der Energiespeichereinrichtung zur weiteren Erläuterung der Erfindung.
- Figur 6: zeigt die Vorrichtung von Figur 2 in einer Draufsicht.
- Figur 7: zeigt die Vorrichtung von Figur 2 in einer Draufsicht in einem ersten Lenkzustand der Kopplungseinrichtung zur weiteren Erläuterung der Erfindung.
- Figur 8: zeigt die Vorrichtung von Figur 2 in einer Draufsicht in einem zweiten Lenkzustand der Kopplungseinrichtung zur weiteren Erläuterung der Erfindung.
- Figur 9: zeigt die Vorrichtung von Figur 2 in einer Draufsicht in einem dritten Lenkzustand der Kopplungseinrichtung zur weiteren Erläuterung der Erfindung.
- Figur 10: zeigt die Vorrichtung von Figur 2 in einem Montagezustand an einem Zweiradrahmen und an einem Lenkerschaft.
- Figur 11: zeigt eine Vorrichtung zum Bereitstellen eines Rückstellmoments in einer perspektivischen Ansicht gemäß einer weiteren Ausführungsform der Erfindung.
- Figur 12: zeigt die Vorrichtung von Figur 11 in einer Explosionsansicht.

### Detaillierte Beschreibung von Ausführungsformen

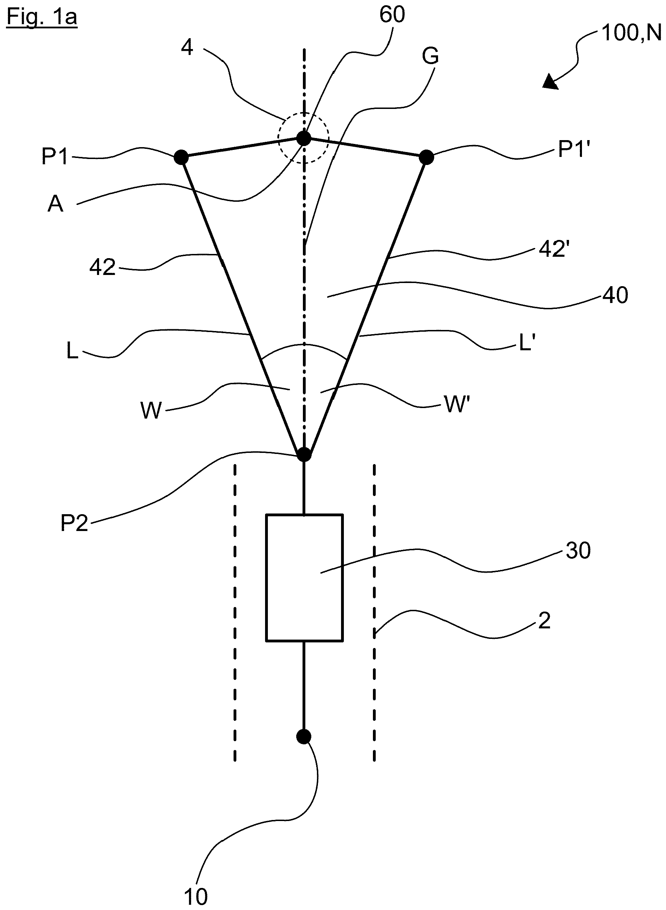

Figur 1a zeigt schematisch eine Vorrichtung 100 zum Bereitstellen eines Rückstellmoments für einen nicht gezeigten Zweiradlenkungsmechanismus. Die Vorrichtung 100 ist in der schematischen Darstellung in einer Draufsicht gezeigt. Die Vorrichtung 100 ist in einer Neutralstellung N der Vorrichtung 100 gezeigt. Die gezeigte Neutralstellung N kann ein Geradeauslenken durch den Zweiradlenkungsmechanismus herbeiführen. In der Neutralstellung N kann sich der Zweiradlenkungsmechanismus in einem Zustand befinden, welcher keinen Lenkwinkel ausbildet. Die Vorrichtung 100 stellt in der gezeigten Neutralstellung N kein Rückstellmoment bereit. Die Vorrichtung 100 kann sich in der Neutralstellung N in einem Kraftgleichgewicht befinden ohne dass eine äußere Lenkkrafteinwirkung an der Vorrichtung 100 wirkt.

Die Vorrichtung 100 weist eine Lagerungseinrichtung 10 auf, welche an einem Zweiradrahmen 2 gelagert ist. Die Vorrichtung 100 weist zudem eine Kopplungseinrichtung 60 auf, welche mit einem Gabelschaft 4 des Zweiradlenkungsmechanismus drehfest gekoppelt ist. Die Kopplungseinrichtung 60 weist eine Drehachse A auf, welche einer Drehachse des Gabelschafts 4 entsprechen kann. Die Vorrichtung 100 kann somit zwischen einer Lagerungsstelle der Lagerungseinrichtung 10 an dem Zweiradrahmen 2 und der Drehachse A der Kopplungseinrichtung 60 angeordnet beziehungsweise eingezwängt sein.

Die Vorrichtung 100 weist eine Energiespeichereinrichtung 30 zum Speichern einer Rückstellkraft auf, welche das Rückstellmoment bereitstellt. Die Kopplungseinrichtung 60 ist über die Energiespeichereinrichtung 30 mit der Lagerungseinrichtung 10 verbunden. Die Vorrichtung 100 weist zudem eine Kraftübertragungseinrichtung 40 auf, welche eingerichtet ist, um eine an dem Zweiradlenkungsmechanismus angreifende oder aus diesem resultierende Lenkkraft auf die Energiespeichereinrichtung 30 zu übertragen.

Die Kraftübertragungseinrichtung 40 weist einen zu der Drehachse A exzentrischen Kraftübertragungspunkt P1 auf, welcher mit der Kopplungseinrichtung 60 wirkverbunden ist, um die Lenkkraft auf den Kraftübertragungspunkt P1 zu übertragen. Durch den exzentrischen Kraftübertragungspunkt P1 und einen Angriffspunkt P2 der Kraftübertragungseinrichtung 40 an der Energiespeichereinrichtung 30 ist eine Kraftwirklinie L ausgebildet, durch welche die Lenkkraft, insbesondere bei einem Lenken nach rechts, auf die Energiespeichereinrichtung 30 übertragbar ist. Der Kraftübertragungspunkt P1 und die Kraftwirklinie L sind eingerichtet, um insbesondere bei einem durch den Zweiradlenkungsmechanismus herbeigeführten Lenken nach rechts die zum Herbeiführen des Lenkens an dem Zweiradlenkungsmechanismus angreifende Lenkkraft auf die Energiespeichereinrichtung 30 zu übertragen, welche eine entsprechende Rückstellkraft bereithalten kann.

Die Kraftübertragungseinrichtung 40 weist einen weiteren zu der Drehachse A exzentrischen Kraftübertragungspunkt P1' auf, welcher mit der Kopplungseinrichtung 60 wirkverbunden ist, um die Lenkkraft auf den Kraftübertragungspunkt P1' zu übertragen. Durch den exzentrischen Kraftübertragungspunkt P1' und den Angriffspunkt P2 der Kraftübertragungseinrichtung 40 an der Energiespeichereinrichtung 30 ist eine weitere Kraftwirklinie L' ausgebildet, durch welche die Lenkkraft, insbesondere bei einem Lenken nach links, auf die Energiespeichereinrichtung 30 übertragbar ist. Der weitere Kraftübertragungspunkt P1' und die weitere Kraftwirklinie L' sind eingerichtet, um insbesondere bei einem durch den Zweiradlenkungsmechanismus herbeigeführten Lenken nach links die zum Herbeiführen des Lenkens an dem Zweiradlenkungsmechanismus angreifende Lenkkraft auf die Energiespeichereinrichtung 30 zu übertragen, welche eine entsprechende Rückstellkraft bereithalten kann.

In der gezeigten Neutralstellung N der Vorrichtung 100 schließt die Kraftwirklinie L und eine Gerade G, welche durch die Drehachse A und den Angriffspunkt P2 verläuft, einen Winkel W ein, welcher kleiner als 180° und in der gezeigten Ausführungsform kleiner als 90°, insbesondere kleiner als 45° als spitzer Winkel ausgebildet ist. Der Winkel W ist von der Drehachse A, dem Angriffspunkt P2 und dem Kraftübertragungspunkt P1 eingeschlossen und an dem Angriffspunkt P2 ausgebildet. Bei dem Winkel W kann es sich um einen spitzen Winkel handeln. Der Winkel W kann gespiegelt an der Geraden G auch von dem Kraftübertragungspunkt P1', dem Angriffspunkt P2 und der Drehachse A eingeschlossen sein und an dem Angriffspunkt P2 als Winkel W' ausgebildet sein. Die Kraftwirklinien L, L' können symmetrisch zu der Geraden G angeordnet sein. Auch die Wirkverbindungen zwischen der Drehachse A und den Kraftübertragungspunkten P1, P1' können symmetrisch zu der Geraden G angeordnet sein. Die Kraftwirklinien L, L' und die Wirkverbindungen können ein Dreieck oder ein Trapez aufspannen, wobei für das Trapez zwei zueinander beabstandete Angriffspunkte an der Energiespeichereinrichtung 30 angreifen können.

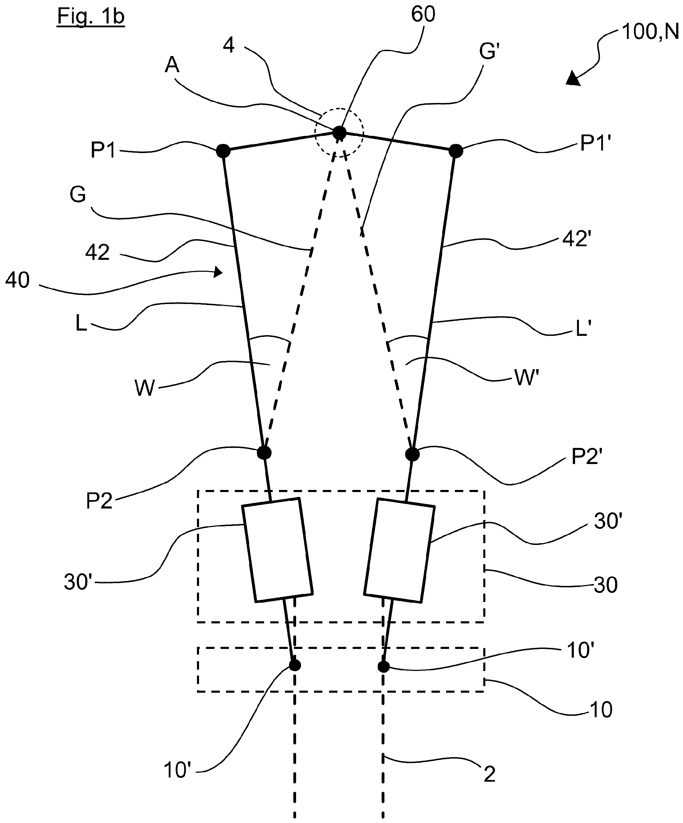

Gemäß der in Figur 1b gezeigten Ausführungsform der Vorrichtung 100 weist die Energiespeichereinrichtung 30 zwei Energiespeicherelemente 30' auf. Zudem weist die Vorrichtung 100 zwei voneinander beabstandete Angriffspunkte P2, P2' auf, über welche die an dem Zweiradlenkungsmechanismus angreifende oder aus diesem resultierende Lenkkraft mit der Kraftübertragungseinrichtung 40 auf die Energiespeichereinrichtung 30 übertragbar ist. In der gezeigten Neutralstellung N der Vorrichtung 100 schließt die Kraftwirklinie L' und eine weitere Gerade G', welche durch die Drehachse A und den weiteren Angriffspunkt P2' verläuft, den Winkel W' ein. Eines der beiden Energiespeicherelemente 30' ist zum Übertragen der Lenkkraft auf die Energiespeichereinrichtung 30 bei einem Lenken nach rechts eingerichtet. Das weitere der beiden Energiespeicherelemente 30' ist zum Übertragen der Lenkkraft auf die Energiespeichereinrichtung 30 bei einem Lenken nach links eingerichtet sein. Bei der Kopplungseinrichtung 60 kann es sich gemäß dieser Ausführungsform um eine in den Figuren nicht gezeigte Zweiradgabel handeln. Die Energiespeicherelemente 30' können Zugfedern aufweisen, welche in die Zweiradgabel eingehängt sein können.

Gemäß der in Figur 1b gezeigten Ausführungsform der Vorrichtung 100 weist die Lagerungseinrichtung 10 zwei Lagerungselemente 10' auf. Die beiden Lagerungselemente 10' sind an dem Zweiradrahmen 2 exponiert angeordnet. Die Lagerungselemente 10' können außenliegend an einem Rahmenrohr angebracht sein. Die Energiespeicherelemente 30' können auch die Lagerungselemente 10' aufweisen, welche an dem Rahmenrohr gelagert sind. Weisen die Energiespeicherelemente 30' die Zugfedern auf, können diese an dem Rahmenrohr eingehängt sein.

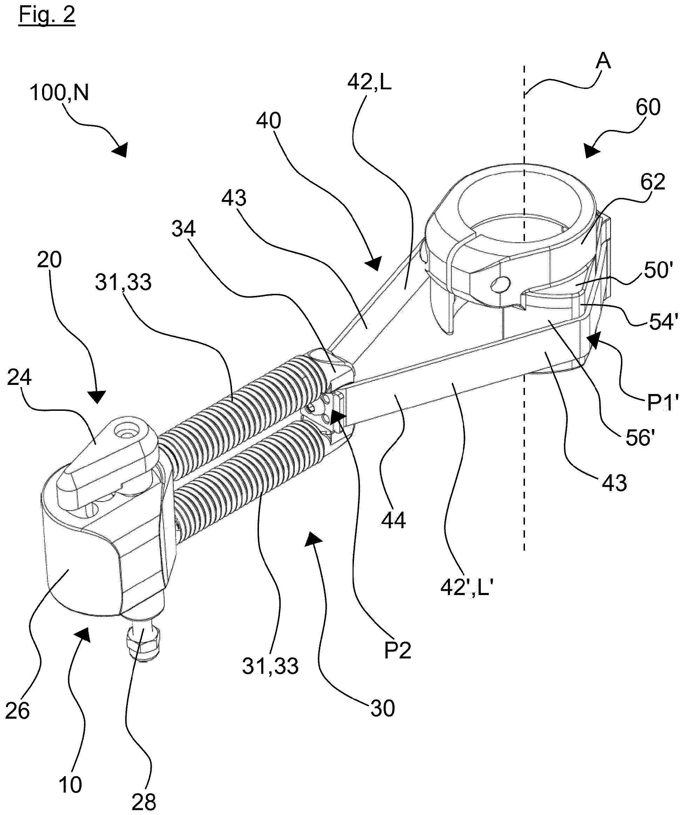

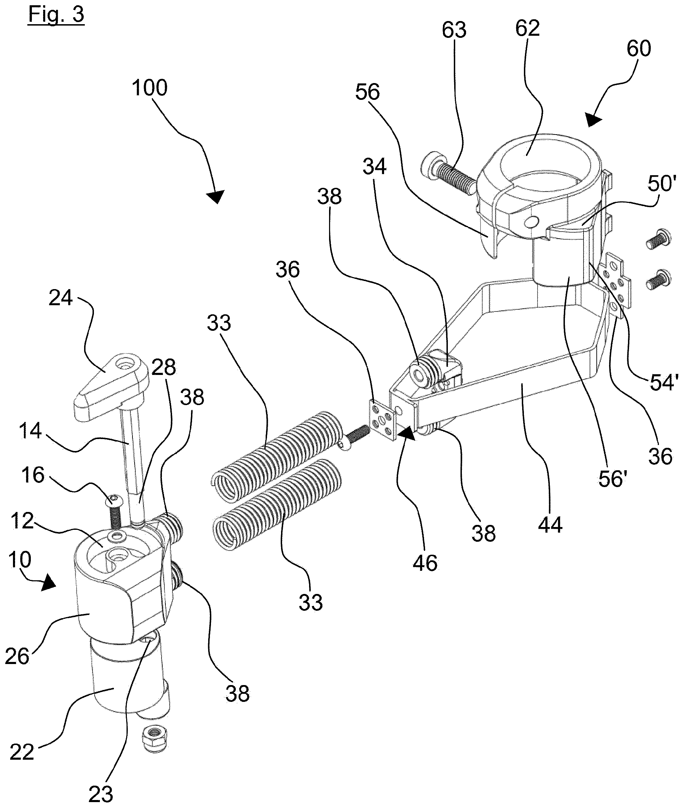

Figuren 2 und 3 zeigen die Vorrichtung 100 in einer Ausführungsform. Figur 2 zeigt die Vorrichtung 100 in der Neutralstellung N in einer perspektivischen Ansicht. Figur 3 zeigt die Vorrichtung 100 in einer Explosionsansicht.

Die Kopplungseinrichtung 60 weist einen Klemmring 62 auf, welcher an dem Gabelschaft 4 mit einer Klemmschraube 63 festklemmbar ist. An der Kopplungseinrichtung 60 ist ein Kraftübersetzungselement 50 angeordnet, an welchem der Kraftübertragungspunkt P1 ausgebildet ist. An der Kopplungseinrichtung 60 ist ein weiteres Kraftübersetzungselement 50' angeordnet, an welchem der weitere Kraftübertragungspunkt P1' ausgebildet ist. Die Kraftübersetzungselemente 50, 50' können sich gegenüberliegend an der Kopplungseinrichtung 60 angeordnet sein. Daher können auch die Kraftübertragungspunkte P1, P1' sich gegenüberliegend an der Kopplungseinrichtung 60 ausgebildet sein. Die Kraftübersetzungselemente 50, 50' können als jeweiliger Nocken 54, 54' ausgebildet sein. Die Kraftübersetzungselemente 50, 50' können der Energiespeichereinrichtung 30 zugewandte Nockenflächen 56, 56' aufweisen. Bei einem Drehen der Kopplungseinrichtung 60 um die Drehachse A kann mindestens einer der Kraftübertragungspunkte P1, P1' auf den Nockenflächen 56, 56' ausgebildet sein.

Die Kraftübertragungseinrichtung 40 weist zwei Kraftübertragungselemente 42, 42' auf, basierend auf welchen die Kraftwirklinien L, L' ausgebildet sind. Die Kraftübertragungselemente 42, 42' sind als Zugelemente 43, 43' ausgebildet, welche bei einem durch den Zweiradlenkungsmechanismus herbeigeführten Lenken nach rechts oder links die Lenkkraft als Zugkraft in die Energiespeichereinrichtung 30 einleiten.

Die Kraftübertragungseinrichtung 40 weist zudem ein Zugband 44 auf, welches die Zugelemente 43, 43' ausbildet. Die Zugelemente 43, 43' können durch Bandabschnitte des Zugbands 44 ausgebildet sein. Das Zugband 44 kann einstückig ausgebildet sein und die Kraftübersetzungselemente 50, 50' zumindest bereichsweise umlaufen. Das Zugband 44 kann an der Kopplungseinrichtung 60 befestigt sein, wobei das Zugband 44 über ein Befestigungselement, beispielsweise eine Befestigungsplatte 36, an der Kopplungseinrichtung 60 befestigt, beispielsweise verschraubt, sein kann. Das Zugband 44 kann an einem der Energiespeichereinrichtung 30 abgewandten Seite an der Kopplungseinrichtung 60 befestigt sein.

Das Zugband 44 kann zudem an der Energiespeichereinrichtung 30 befestigt sein. Die Energiespeichereinrichtung 30 kann zwei Zugfedern 33 aufweisen. Das Zugband 44 kann an einem Halter 34 befestigt sein, welcher mit der Energiespeichereinrichtung 30 verbunden ist. Das Zugband 44 kann an dem Halter 34 über ein Befestigungselement, beispielsweise eine Befestigungsplatte 36, befestigt, beispielsweise verschraubt, sein. Ist das Zugband 44 einstückig ausgebildet, kann das Zugband 44 an einem Bandüberlappungsbereich 46 an dem Halter 34 verschraubt sein.

Der Halter 34 kann zwei Gewinde 38 aufweisen, auch welche die als Spiralfedern ausgebildeten Zugfedern 33 aufgeschraubt sein können. Die Zugelemente 43, 43' können an den Zugfedern 33 beabstandet angreifen, wobei das Zugband 44 zwischen der Energiespeichereinrichtung 30 und den Kraftübertragungselementen 42, 42' trapezartig aufgespreizt sein kann.

Die Lagerungseinrichtung 10 kann einen in einer zylindrischen Aufnahme 26 angeordneten Exzenter 22 aufweisen, welcher in der Aufnahme 26 über eine Zentrierung 16, beispielsweise eine zentrische Verschraubung, zentrisch gelagert sein kann. Die Lagerungseinrichtung 10 kann zudem einen Betätigungsmechanismus 20 aufweisen, mit welchem der Exzenter 22 exzentrisch zur Zentrierung 16 rotierbar ist. Hierfür kann die Lagerungseinrichtung 10 einen Betätigungshebel 24 aufweisen, welcher über einen Eingriffsbereich 14 in den Exzenter 22 in einen exzentrisch zur Zentrierung 16 in dem Exzenter 22 ausgebildeten Exzentereingriff 23 eingreifen kann. Über einen formschlüssigen Eingriff des Eingriffsbereichs 14 in den Exzentereingriff 23 kann der Exzenter 22 über den Betätigungshebel 24 gedreht werden. Der Betätigungshebel 24 kann einen Lagerungsstift 28 aufweisen, welcher an einem Zweiradrahmen 2 lagerbar ist. Durch eine Rotation des Exzenters 22 kann die Aufnahme 26 relativ zu dem Zweiradrahmen 2 bewegt werden. Bei der Rotation des Exzenters 22 kann der Eingriffsbereichs 14 entlang einer Führungsnut 12, welche in der Aufnahme 26 angeordnet sein kann, bewegt beziehungsweise geführt werden.

An der Aufnahme 26 kann die Energiespeichereinrichtung 30 befestigt sein. Weist die Energiespeichereinrichtung 30 die Zugfedern 33 auf, kann durch die relative Bewegung der Aufnahme 26 relativ zu dem Zweiradrahmen 2 eine Vorspannung auf die Zugfedern 33 übertragen werden. Die Zugfedern 33 können mit an der Aufnahme 26 angeordneten Gewinden 38 befestigt sein. Die Bewegung der Aufnahme 26 kann durch eine Führung 12 geführt werden, welche den Eingriffsbereich 14 des Betätigungshebels 24 aufnimmt. Somit kann in der Neutralstellung N bereits Energie in die Energiespeichereinrichtung 30 übertragen beziehungsweise eine Zugbeanspruchung der Zugfedern 33 erzeugt werden, um eine Stabilisierungskraft auf den Lenkerschaft 4 zu übertragen.

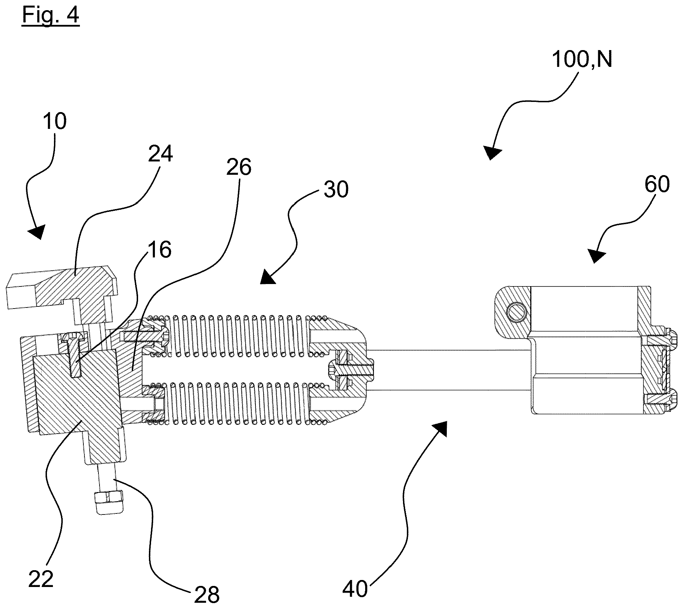

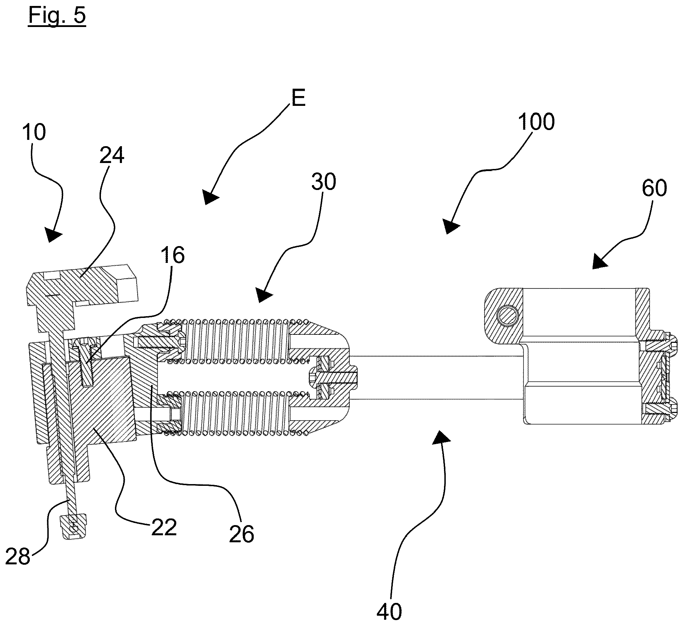

Figuren 4 und 5 zeigen die Vorrichtung 100 in einem Schnitt entlang der Geraden G. In Figur 4 befindet sich die Aufnahme 26 der Lagerungseinrichtung 10 in einer durch eine Rotationsstellung des Exzenters 22 in entgegengesetzter Richtung zur Kopplungseinrichtung 60 verschobenen Stellung, in welcher eine Vorspannung der Zugfedern 33 der Energiespeichereinrichtung 30 herbeigeführt ist. In Figur 5 befindet sich die Aufnahme 26 der Lagerungseinrichtung 10 in einer durch eine Rotationsstellung des Exzenters 22 in Richtung zu der Kopplungseinrichtung 60 verschobenen Stellung, in welcher die Zugfedern 33 der Energiespeichereinrichtung 30 im Vergleich zu dem in Figur 4 gezeigten vorgespannten Zustand entspannt sind. Bei dem in Figur 5 gezeigten Zustand kann es sich um einen Montagezustand oder um einen entspannten Zustand E handeln, in welchem die Vorspannung der Zugfedern 33 im Vergleich zu dem in Figur 4 gezeigten vorgespannten Zustand der Zugfedern 33 verringert oder entfernt ist.

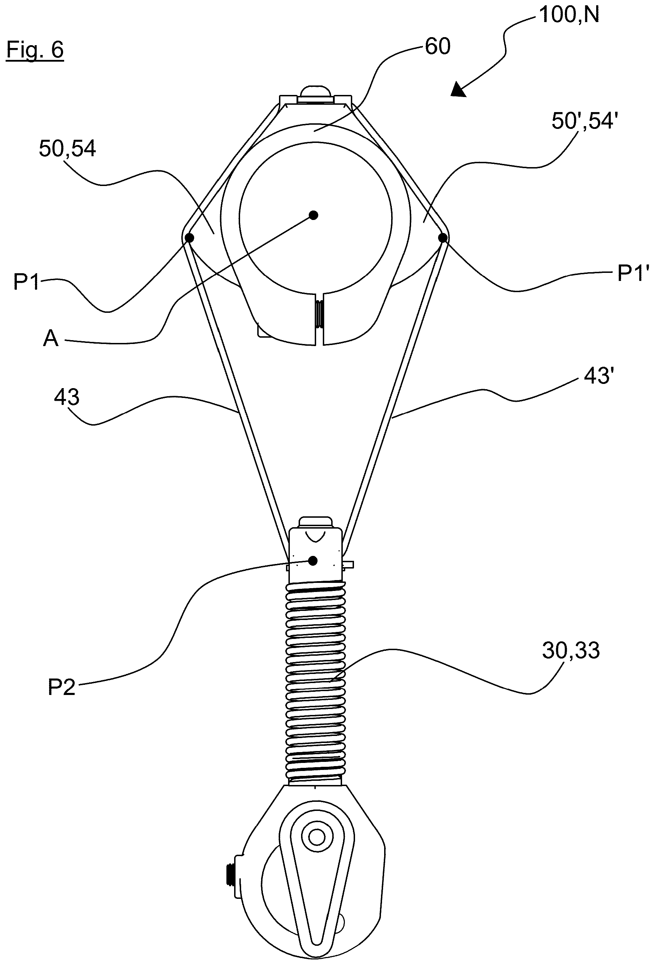

Figur 6 zeigt die Vorrichtung 100 in einer Draufsicht und in einem vorgespannten Zustand der Zugfedern 33 der Energiespeichereinrichtung 30 wie in Figur 4 gezeigt. Die Vorrichtung 100 befindet sich in der Neutralstellung N, in welcher die Zugelemente 43, 43' ausgehend von den Kraftübertragungspunkten P1, P1' bis zu einem gemeinsamen Angriffspunkt P2 an den Zugfedern 33 gleich lang und gleich zugbeanspruch sind. Die Kraftübertragungspunkte P1, P1' sind an den Nocken 54, 54' beziehungsweise an den Kraftübersetzungselementen 50, 50' symmetrisch ausgebildet. Dabei sind die Kraftübertragungspunkte P1, P1' an den jeweils größten Radien der Nocken 54, 54' ausgebildet.

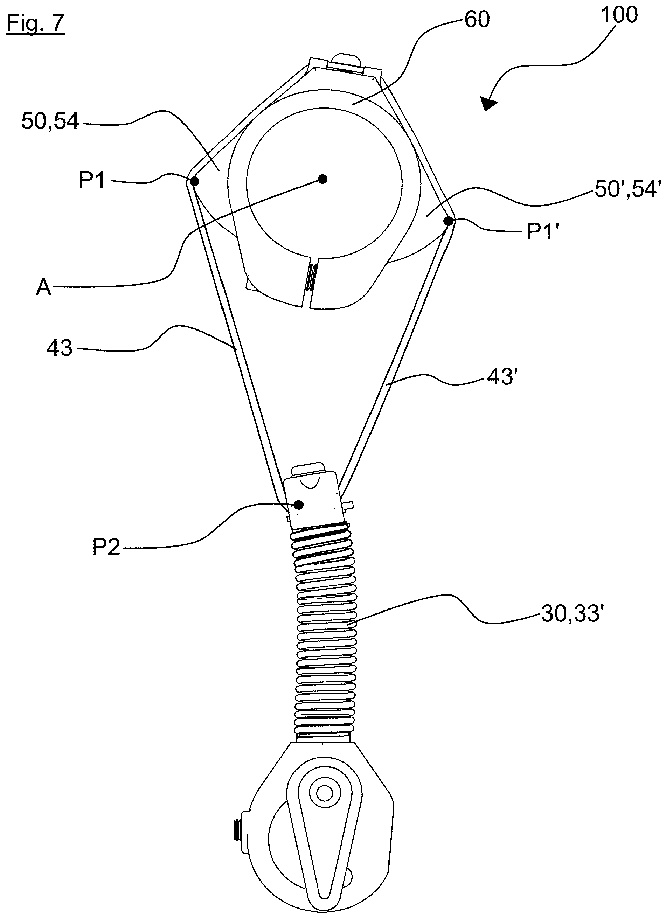

Figur 7 zeigt die Vorrichtung 100 in der Draufsicht und in einem im Vergleich zu dem in Figur 6 gezeigten Zustand veränderten Zustand. In dem in Figur 7 gezeigten Zustand ist die Kopplungseinrichtung 60 nach rechts durch ein sich einstellendes Lenken nach rechts gedreht. In diesem Zustand sind die beiden Zugelemente 43, 43' noch zugbeansprucht und die Zugfeder 33 ist im Vergleich zu dem in Figur 6 gezeigten Zustand biegebeansprucht. Zwischen den in Figur 6 und Figur 7 gezeigten Zuständen kann sich ein Rückstellmoment progressiv aufbauen. Das Rückstellmoment kann sich direkt aus der Neutralstellung N in Figur 6 progressiv aufbauen.

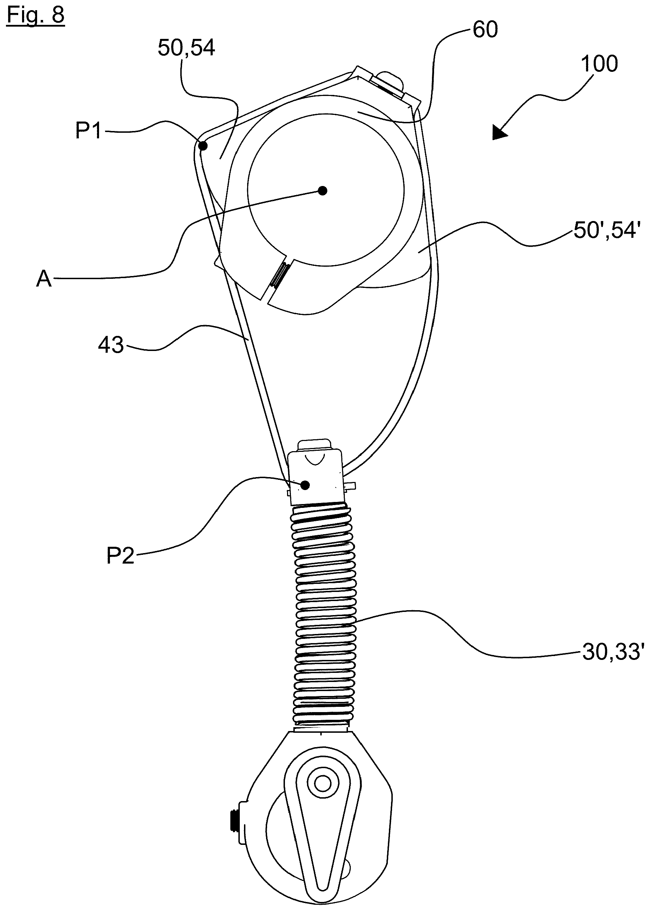

Figur 8 zeigt die Vorrichtung 100 in der Draufsicht und in einem im Vergleich zu dem in Figur 7 gezeigten Zustand weiter veränderten Zustand. In dem in Figur 8 gezeigten Zustand ist die Kopplungseinrichtung 60 noch weiter nach rechts durch ein größeres Lenken nach rechts gedreht. In diesem Zustand ist nur noch ein Zugelement 43 der Zugelemente 43, 43' zugbeansprucht. Handelt es sich bei dem nicht zugbeanspruchten Zugelement um ein Band, kann dieses erschlafft sein. Die Zugfeder 33 ist im Vergleich zu dem in Figur 6 gezeigten Zustand stärker zugbeansprucht.

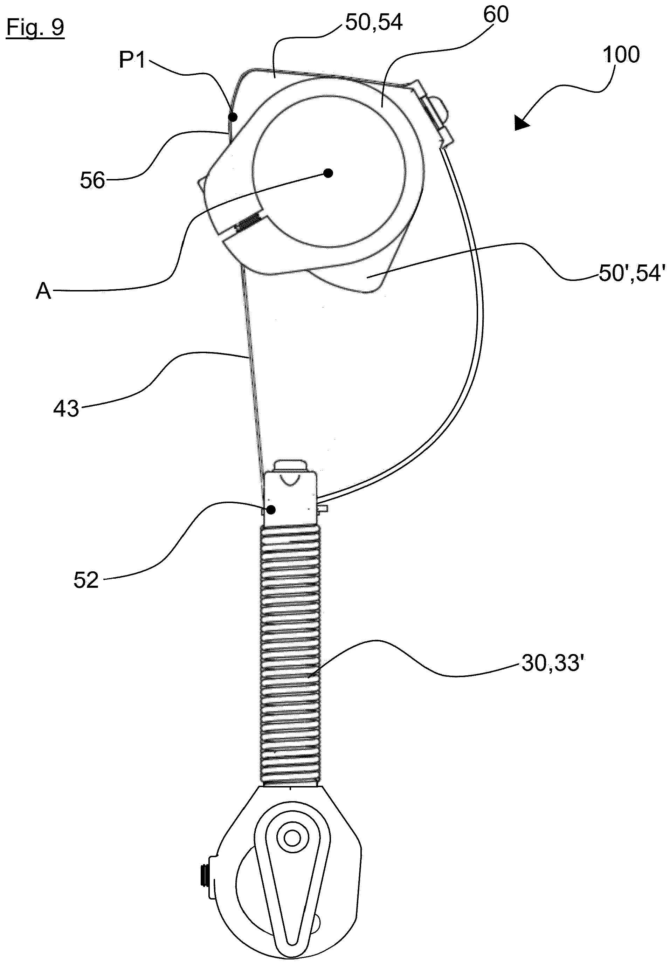

Figur 9 zeigt die Vorrichtung 100 in der Draufsicht und in einem im Vergleich zu dem in Figur 8 gezeigten Zustand weiter veränderten Zustand. In dem in Figur 9 gezeigten Zustand ist die Kopplungseinrichtung 60 im Vergleich zu dem in Figur 8 gezeigten Zustand nochmals weiter nach rechts durch ein noch größeres Lenken nach rechts gedreht. In diesem Zustand ist der Kraftübersetzungspunkt P1 auf dem Kraftübersetzungselement 50 beziehungsweise auf der Nockenfläche 56 verschoben, so dass der Kraftübersetzungspunkt P1 an einem kleineren Radius des Nockens 54 ausgebildet ist. Die Kraftübersetzung kann sich daher derart ändern, dass der Aufbau des Rückstellmoments einen degressiven verlauf einnimmt. Die Zugfeder 33 ist im Vergleich zu dem in Figur 8 gezeigten Zustand stärker zugbeansprucht.

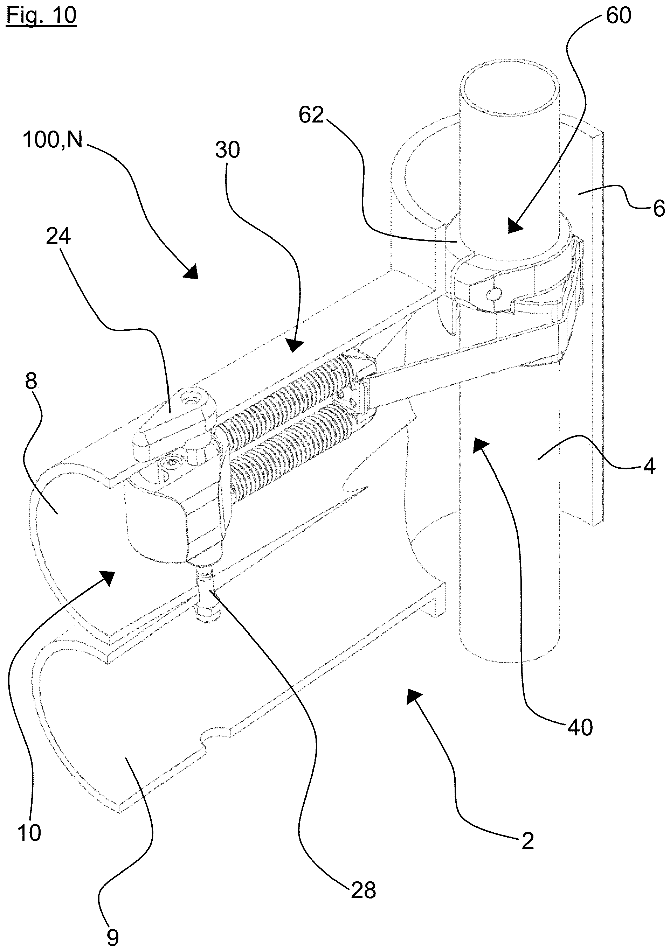

Figur 10 zeigt die Vorrichtung 100 in einem Montagezustand. Die Kopplungseinrichtung 60 ist über den Klemmring 62 an dem Gabelschaft 4 befestigt. Die Kopplungseinrichtung 60 ist in einem Steuerrohr 6 des Zweiradrahmens 2 integriert angeordnet. Die Lagerungseinrichtung 10 ist über den Lagerungsstift 28 an einem Oberrohr 8 des Zweiradrahmens 2 gelagert. In der gezeigten Ausführungsform ist der Lagerungsstift 28 zusätzlich an einem Unterrohr 9 des Zweiradrahmens 2 gelagert. Die Vorrichtung 100 ist in einem in den Zweiradrahmen 2 integrierten Zustand montiert. Die Kraftübertragungseinrichtung 40 ist in den Zweiradrahmen 2 integriert, wobei die Kraftübertragungseinrichtung 40 in dem Steuerrohr 6 und dem Oberrohr 8 integriert angeordnet sein kann. Der Betätigungshebel 24 kann als einzige Komponente der Vorrichtung 100 aus dem Zweiradrahmen 2 herausragen, um in der Neutralstellung N Energie auf die Energiespeichereinrichtung 30 zu übertragen.

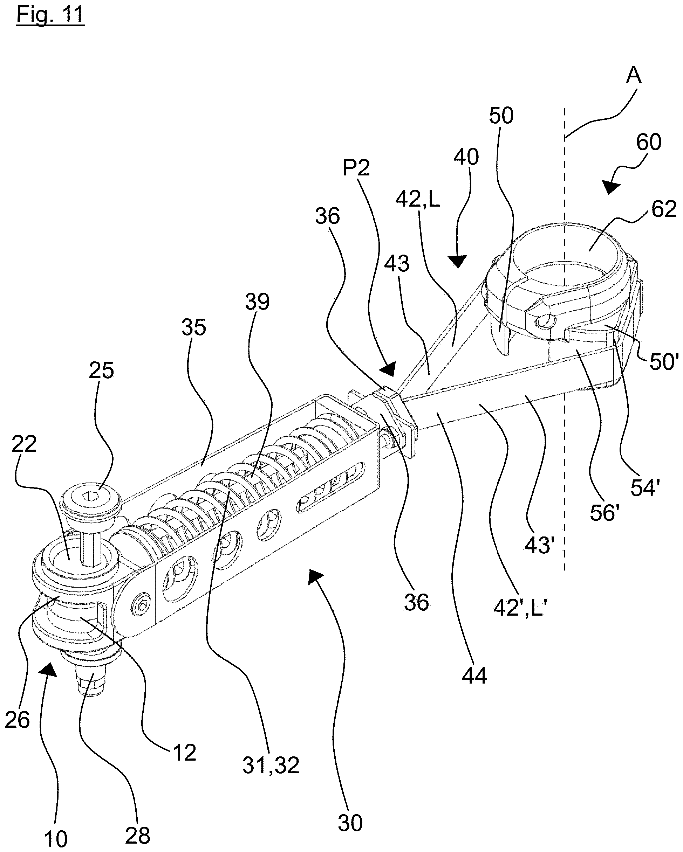

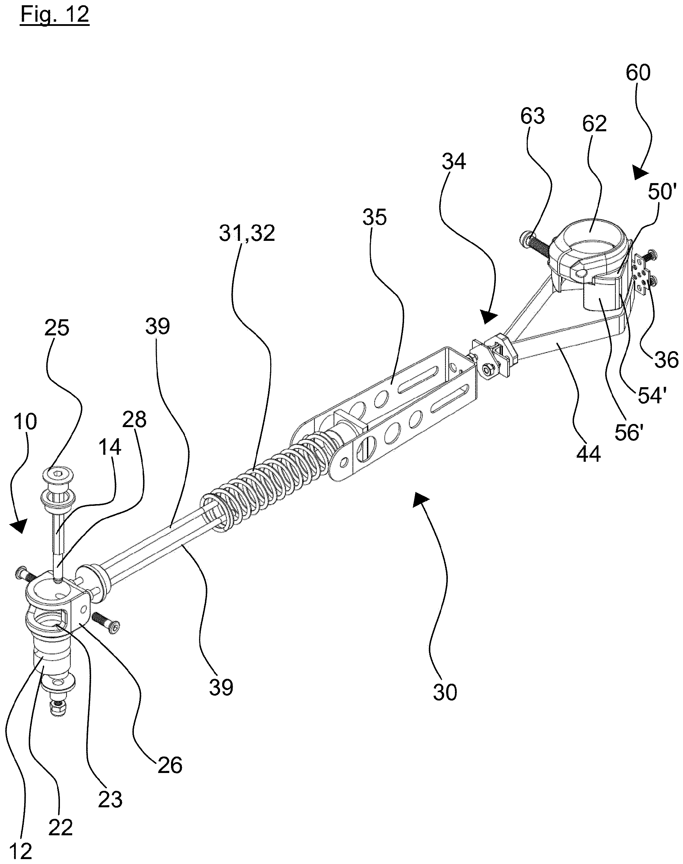

Figuren 11 und 12 zeigen die Vorrichtung 100 in einer weiteren Ausführungsform. Figur 11 zeigt die Vorrichtung 100 in der Neutralstellung N in einer perspektivischen Ansicht. Figur 12 zeigt die Vorrichtung 100 in einer Explosionsansicht.

Die in den Figuren 11 und 12 gezeigte Ausführungsform der Vorrichtung 100 unterscheidet sich von der in den Figuren 2 bis 10 gezeigten Ausführungsform der Vorrichtung 100 in der Ausbildung der Kraftübertragungseinrichtung 40, der Ausbildung der Energiespeichereinrichtung 30 und der Ausbildung der Lagerungseinrichtung 10.

Die Kraftübertragungseinrichtung 40 der in den Figuren 11 und 12 gezeigten Ausführungsform weist im Gegensatz zu der in den Figuren 2 bis 10 gezeigten Ausführungsform der Kraftübertragungseinrichtung 40 Zugelemente 43, 43' auf, welche an der Energiespeichereinrichtung 30 an einem Angriffspunkt P2 angreifen, wobei das Zugband 44 zwischen der Energiespeichereinrichtung 30 und den Kraftübertragungselementen 42, 42' als Dreieck aufgespreizt sein kann.

Die Energiespeichereinrichtung 30 der in den Figuren 11 und 12 gezeigten Ausführungsform weist im Gegensatz zu der in den Figuren 2 bis 10 gezeigten Ausführungsform der Energiespeichereinrichtung 30 eine als Spiralfeder ausgebildete Druckfeder 32 auf. Die Druckfeder 32 kann über Druckstangen 39 bei einem Lenken nach links oder rechts auf Druck beansprucht werden. Die Druckstangen 39 sind mit dem Band 44 verbunden, sodass eine Zugbeanspruchung des Bands 44 eine Zugbeanspruchung der Druckstangen 39 und somit eine Kompression der Druckfeder 32 herbeiführen kann. Die Druckfeder 32 kann in einem Federkäfig 35 angeordnet sein, welcher mit der Lagerungseinrichtung 10 verbunden sein kann. Die Druckstangen 39 können an dem Federkäfig 35 geführt sein.

Die Lagerungseinrichtung 10 der in den Figuren 11 und 12 gezeigten Ausführungsform weist im Gegensatz zu der in den Figuren 2 bis 10 gezeigten Ausführungsform der Energiespeichereinrichtung 30 ein mit einem Werkzeug, beispielsweise einem Sechskant, betätigbares Betätigungselement 25 auf. Der Exzenter 22 weist die Führung 12 auf, welche einen Anschlagskörper zum Begrenzen einer Rotation des Exzenters 22 aufweisen kann.

### Bezugszeichen

- 2: Zweiradrahmen
- 4: Gabelschaft
- 6: Steuerrohr
- 8: Oberrohr
- 9: Unterrohr
- 10: Lagerungseinrichtung
- 10': Lagerungselement
- 12: Führungsnut
- 14: Eingriffsbereich
- 16: Zentrierung
- 20: Betätigungsmechanismus
- 22: Exzenter
- 23: Exzentereingriff
- 24: Betätigungshebel
- 25: Betätigungselement
- 26: Aufnahme
- 28: Lagerungsstift
- 30: Energiespeichereinrichtung
- 30': Energiespeicherelement
- 31: Feder
- 32: Druckfeder
- 33: Zugfeder
- 34: Halter
- 35: Federkäfig
- 36: Befestigungsplatte
- 38: Gewinde
- 39: Druckstange
- 40: Kraftübertragungseinrichtung
- 42, 42': Kraftübertragungselement
- 43, 43': Zugelement
- 44: Zugband
- 46: Bandüberlappungsbereich
- 50, 50': Kraftübersetzungselement
- 54, 54': Nocken
- 56: Nockenfläche
- 60: Kopplungseinrichtung
- 62: Klemmring
- 63: Klemmschraube
- 100: Vorrichtung
- E: entspannter Zustand
- G, G': Gerade
- L, L': Kraftwirklinie
- N: Neutralstellung
- P1, P1': Kraftübertragungspunkt
- P2, P2': Angriffspunkt
- W, W': Winkel

## Patentansprüche

1. Vorrichtung (100) zum Bereitstellen eines Rückstellmoments für einen Zweiradlenkungsmechanismus, mit
- einer Lagerungseinrichtung (10) zum Lagern der Vorrichtung (100) an einem Zweiradrahmen (2),
- einer Kopplungseinrichtung (60) zum Koppeln der Vorrichtung (100) mit einem Gabelschaft (4), wobei die Kopplungseinrichtung (60) eine Drehachse (A) aufweist,
- einer Energiespeichereinrichtung (30) zum Speichern einer Rückstellkraft und
- einer Kraftübertragungseinrichtung (40) zum Übertragen einer Lenkkraft auf die Energiespeichereinrichtung (30), wobei die Kraftübertragungseinrichtung (40) einen zu der Drehachse (A) exzentrischen Kraftübertragungspunkt (P1) aufweist,
wobei die Kraftübertragungseinrichtung (40) eine Kraftwirklinie (L) durch den exzentrischen Kraftübertragungspunkt (P1) und einen Angriffspunkt (P2) der Kraftübertragungseinrichtung (40) an der Energiespeichereinrichtung (30) zum Übertragen der Lenkkraft auf die Energiespeichereinrichtung (30) ausbildet, und
wobei in einer Neutralstellung (N) der Vorrichtung (100) die Kraftwirklinie (L) und eine Gerade (G), welche durch die Drehachse (A) und den Angriffspunkt (P2) verläuft, einen Winkel (W) einschließen.

2. Vorrichtung (100) nach Anspruch 1,
wobei die Kraftübertragungseinrichtung (40) zwei Kraftübertragungselemente (42, 42') zum Übertragen der Lenkkraft auf die Energiespeichereinrichtung (30) aufweist,
wobei die Kraftübertragungselemente (42, 42') jeweils einen zu der Drehachse (A) exzentrischen Kraftübertragungspunkt (P1, P1') aufweisen,
wobei eine Kraftwirklinie (L) durch einen exzentrischen Kraftübertragungspunkt (P1) und den Angriffspunkt (P2) zum Übertragen der Lenkkraft auf die Energiespeichereinrichtung (30) bei einem Lenken nach rechts ausgebildet ist, und wobei eine weitere Kraftwirklinie (L') durch den weiteren exzentrischen Kraftübertragungspunkt (P1') und den Angriffspunkt (P2) zum Übertragen der Lenkkraft auf die Energiespeichereinrichtung (30) bei einem Lenken nach links ausgebildet ist.

3. Vorrichtung (100) nach Anspruch 1 oder 2,
wobei die Vorrichtung (100) eingerichtet ist, um in der Neutralstellung (N) Energie auf die Energiespeichereinrichtung (30) zu übertragen, mit welcher in der Neutralstellung (N) eine Stabilisierungskraft zum Stabilisieren des Gabelschafts (4) über die Kraftübertragungseinrichtung (40) auf die Kopplungseinrichtung (60) übertragbar ist.

4. Vorrichtung (100) nach einem der vorhergehenden Ansprüche, mit
einem Kompensationsmechanismus, welcher zum Kompensieren einer Zugkraft eingerichtet ist, die bei einem sich aus der Neutralstellung (N) in einem vorbestimmten Lenkwinkelbereich einstellenden Lenkwinkel auf die Kraftübertragungseinrichtung (40) einwirkt.

5. Vorrichtung (100) nach einem der vorhergehenden Ansprüche,
wobei die Kraftübertragungseinrichtung (40) eingerichtet ist, um bei einem sich aus der Neutralstellung (N) in einem vorbestimmten Lenkwinkelbereich einstellenden Lenkwinkel einen progressiven Aufbau des Rückstellmoments bereitzustellen.

6. Vorrichtung (100) nach einem der vorhergehenden Ansprüche,
wobei die Energiespeichereinrichtung (30) die Lagerungseinrichtung (10) und die Kopplungseinrichtung (60) elastisch koppelt.

7. Vorrichtung (100) nach einem der vorhergehenden Ansprüche,
wobei die Energiespeichereinrichtung (30) mindestens eine Feder (31) zum Speichern einer Spannenergie aufweist.

8. Vorrichtung (100) nach Anspruch 7,
wobei die Vorrichtung (100) eingerichtet ist, um in der Neutralstellung (N) die Feder (31) mit einer Vorspannung zu beaufschlagen, mit welcher in der Neutralstellung (N) eine Stabilisierungskraft zum Stabilisieren des Gabelschafts (4) über die Kraftübertragungseinrichtung (40) auf die Kopplungseinrichtung (60) übertragbar ist.

9. Vorrichtung (100) nach Anspruch 7 oder 8,
wobei die Feder (31) derart eingerichtet ist, dass sie bei einem sich aus der Neutralstellung (N) in einem vorbestimmten Lenkwinkelbereich einstellenden Lenkwinkel biegebeansprucht ist.

10. Vorrichtung (100) nach einem der vorhergehenden Ansprüche,
wobei die Kraftübertragungseinrichtung (40) einen Zugmechanismus aufweist, welcher die Kopplungseinrichtung (60) und die Energiespeichereinrichtung (30) zum Übertragen einer auf der Lenkkraft basierenden Zugkraft auf die Energiespeichereinrichtung (30) verbindet,
wobei der Zugmechanismus zwei Zugelemente (43, 43') zum Übertragen der Lenkkraft auf die Energiespeichereinrichtung (30) aufweist,
wobei eine Kraftwirklinie (L) durch ein Zugelement (43) zum Übertragen der Lenkkraft auf die Energiespeichereinrichtung (30) bei einem Lenken nach rechts ausgebildet ist, wobei eine weitere Kraftwirklinie (L') durch das weitere Zugelement (43') zum Übertragen der Lenkkraft auf die Energiespeichereinrichtung (30) bei einem Lenken nach links ausgebildet ist, und
wobei der Zugmechanismus derart eingerichtet ist, dass bei einem sich aus der Neutralstellung (N) in einem vorbestimmten Lenkwinkelbereich einstellenden Lenkwinkel beide Zugelemente (43, 43') zugbeansprucht sind.

11. Vorrichtung (100) nach Anspruch 10,
wobei die Zugelemente (43, 43') an der Energiespeichereinrichtung (30) beabstandet zueinander angeordnet sind.

12. Vorrichtung (100) nach Anspruch 10 oder 11,
wobei mindestens eines der Zugelemente (43, 43') durch ein Band ausgebildet ist, welches mit der Kopplungseinrichtung (60) verbunden ist, und
wobei das Band als biegeschlaffes Band ausgebildet ist.

13. Vorrichtung (100) nach einem der vorhergehenden Ansprüche,
wobei die Kraftübertragungseinrichtung (40) ein an der Kopplungseinrichtung (60) angeordnetes Kraftübersetzungselement (50) aufweist, an welchem der Kraftübertragungspunkt (P1) ausgebildet ist,
wobei das Kraftübersetzungselement (50) eingerichtet ist, um bei einem sich in einem vorbestimmten Lenkwinkelbereich einstellenden Lenkwinkel eine Kraftübersetzung zum Übertragen der Lenkkraft auf die Energiespeichereinrichtung (30) variabel einzustellen.

14. Vorrichtung (100) nach einem der vorhergehenden Ansprüche,
wobei die Lagerungseinrichtung (10) einen Betätigungsmechanismus (20) zum Übertragen von Energie in der Neutralstellung (N) auf die Energiespeichereinrichtung (30) aufweist.

15. Vorrichtung (100) nach Anspruch 14,
wobei der Betätigungsmechanismus (20) einen rotatorisch betätigbaren Exzenter (22) aufweist, welcher mit der Energiespeichereinrichtung (30) zum Umwandeln einer Rotationsbewegung des Exzenters (22) in auf die Energiespeichereinrichtung (30) übertragbare Energie wirkverbunden ist.

16. Zweiradrahmen (2), insbesondere ein Fahrradrahmen,
an welchem die Vorrichtung (100) nach einem der vorhergehenden Ansprüche mit einem Gabelschaft (4) verbindbar gelagert ist.

17. Zweiradrahmen (2) nach Anspruch 16,
wobei die Vorrichtung (100) in mindestens eine Rahmenkomponente des Zweiradrahmens (2) integriert angeordnet ist.

18. Zweiradlenkung, insbesondere eine Fahrradlenkung, mit
einer Vorrichtung (100) nach einem der Ansprüche 1 bis 15 und
einem Gabelschaft (4), mit welchem die Vorrichtung (100) gekoppelt ist.

19. Zweirad, insbesondere ein Fahrrad,
welches einen Zweiradrahmen (2) nach Anspruch 16 oder 17 oder eine Zweiradlenkung nach Anspruch 18 aufweist.
